# EUROPÄISCHE PATENTSCHRIFT

(11) **EP 4 478 030 B1**
(45) Veröffentlichungstag und Bekanntmachung des Hinweises auf die Patenterteilung: **21.10.2026**
(21) Anmeldenummer: 24180635.5
(22) Anmeldetag: 07.06.2024
(51) Int. Cl.: G01N 21/3504, G01N 21/27

(54) **VERFAHREN UND VORRICHTUNG ZUM ANALYSIEREN EINER GASPROBE MITTELS ANALYSE DES SYSTEMVERHALTENS**
METHOD AND APPARATUS FOR ANALYZING A GAS SAMPLE BY ANALYZING SYSTEM BEHAVIOR
PROCÉDÉ ET DISPOSITIF D'ANALYSE D'UN ÉCHANTILLON GAZEUX PAR ANALYSE DU COMPORTEMENT DU SYSTÈME

(30) Priorität: 14.06.2023 DE 102023115476
(43) Veröffentlichungstag der Anmeldung: 18.12.2024
(73) Patentinhaber: Dräger Safety AG & Co. KGaA, 23560 Lübeck (DE)
(72) Erfinder: Draack, Sebastian, 23558 Lübeck (DE)

(56) Entgegenhaltungen:
- EP-A1- 2 604 998
- EP-B1- 3 332 230
- CN-A- 101 718 670
- JP-A- 2008 082 815
- US-A1- 2008 225 273
- KATAEV M Y ET AL: "An analysis of methods of atmospheric gas concentration retrieving from diode laser measurements", 20030101, vol. 5311, no. 1, 1 January 2003 (2003-01-01), pages 280 - 284, XP002370999, DOI: 10.1117/12.545733

## Beschreibung

Die Erfindung betrifft eine Gasdetektionsvorrichtung und ein Gasdetektionsverfahren, welche eine Gasprobe auf mehrere Zielgase zu analysieren vermögen, wobei die Gasprobe aus einem zu überwachenden räumlichen Bereich stammt. In vielen Fällen umfasst die Analyse die Ermittlung, welche Zielgase jeweils mit welcher Zielgas-Konzentration in der Gasprobe vorhanden sind.

Bekanntgeworden sind Gasdetektionsgeräte, welche eine Strahlungsquelle und eine Messkammer umfassen. Eine zu untersuchende Gasprobe gelangt in die Messkammer. Strahlung, welche von der Strahlungsquelle emittiert wird, durchdringt mindestens einmal die Messkammer. Ein Zielgas in der Messkammer absorbiert einen Teil der Strahlung, welche die Messkammer durchdringt. Ein Detektor an der Messkammer misst ein Maß für die Intensität von auftreffender Strahlung oder ein sonstiges Maß für die Intensität der Strahlung in der Messkammer. Diese Intensität korreliert mit der gesuchten Zielgas-Konzentration. Auch die Erfindung nutzt in einer Ausgestaltung dieses Prinzip.

US 2008 / 0 225 273 A1 beschreibt eine Vorrichtung zur Messung der Konzentration eines Zielgases. Die Vorrichtung umfasst eine Lichtquelle zum Emittieren einer Strahlung, einen Mess-Detektor und einen Referenz-Detektor, wobei der Mess-Detektor dazu eingerichtet ist, die durch ein Messvolumen passierte Strahlung zu detektieren und ein Messsignal zu erzeugen, wobei der Referenz-Detektor dazu eingerichtet ist, die durch eine Referenzkammer passierte Strahlung zu detektieren und ein Referenzsignal zu erzeugen, wobei die Referenzkammer eine bekannte Konzentration des Zielgases enthalt, und wobei zur Bestimmung der Gaskonzentration eine Kreuzkorrelation zwischen dem Mess- und dem Referenzsignal gebildet wird.

In EP 2 604 998 A1 werden die vibrationsbedingten Storungen mittels eines Beschleunigungssensors erfasst und kompensiert.

In JP 2008 / 082815 A wird zu diesem Zweck ein Gasflusssensor verwendet.

Der Erfindung liegt die Aufgabe zugrunde, eine Gasdetektionsvorrichtung und ein Gasdetektionsverfahren bereitzustellen, welche in einer Gasprobe aus einem zu überwachenden räumlichen Bereich mit größerer Betriebssicherheit als bekannte Vorrichtungen und Verfahren die jeweilige Konzentration von mehreren Zielgasen zu ermitteln vermögen.

Die Aufgabe wird durch eine Gasdetektionsvorrichtung mit den Merkmalen des Anspruchs 1 und durch ein Gasdetektionsverfahren mit den Merkmalen des Anspruchs 7 gelöst. Vorteilhafte Ausgestaltungen der erfindungsgemäßen Gasdetektionsvorrichtung sind, soweit sinnvoll, auch vorteilhafte Ausgestaltungen des erfindungsgemäßen Gasdetektionsverfahrens und umgekehrt.

Die erfindungsgemäße Gasdetektionsvorrichtung und das erfindungsgemäße Gasdetektionsverfahren vermögen automatisch eine Gasprobe zu analysieren. Diese Gasprobe stammt aus einem räumlichen Bereich.

Der räumliche Bereich und daher die Gasprobe können mindestens ein zu detektierendes Zielgas aufweisen. Unter einem "Zielgas" wird ein Gas verstanden, das im räumlichen Bereich auftreten kann und das entdeckt werden soll, insbesondere ein brennbares und / oder giftiges und / oder auf andere Weise schädliches Gas oder auch Sauerstoff oder Kohlendioxid oder ein Narkosemittel. Selbstverständlich können im räumlichen Bereich und damit in der Gasprobe andere Substanzen auftreten, die bei einer bestimmten Anwendung nicht detektiert zu werden brauchen, beispielsweise Wassertröpfchen oder Staubpartikel. Was ein zu detektierendes Zielgas ist, kann also von der Anwendung abhängen.

Die erfindungsgemäße Gasdetektionsvorrichtung und das erfindungsgemäße Gasdetektionsverfahren vermögen eine Zielgas-Information zu liefern. Diese Zielgas-Information umfasst mindestens eine der folgenden Informationen:
- die summierten Konzentrationen der zu detektierenden Zielgase in der Gasprobe - falls nur ein Zielgas vorhanden ist, so wird die Konzentration dieses Zielgases in der Gasprobe geliefert,
- welche Zielgase in der Gasprobe vorhanden sind,
- für mindestens ein Zielgas, bevorzugt für jedes Zielgas, ein Maß für die jeweilige Menge oder für die Konzentration dieses Zielgases in der Gasprobe.

Selbstverständlich kann die Zielgas-Information auch die Informationen umfassen, dass kein zu detektierendes Zielgas mit einer Konzentration oberhalb einer vorgegebenen unteren Schranke in der Gasprobe vorhanden ist.

Die erfindungsgemäße Gasdetektionsvorrichtung umfasst ein Gasdetektionsgerät. Das Gasdetektionsgerät umfasst eine Messkammer und eine Referenzkammer. Die Messkammer ist oder wird mit der zu untersuchenden Gasprobe gefüllt. Die Referenzkammer ist mit einem Referenzgas gefüllt. Dieses Referenzgas ist frei von dem oder jedem zu detektierenden Zielgas. Bevorzugt ist die Referenzkammer fluiddicht gegen den zu überwachenden Bereich und gegen die Gasprobe in der Messkammer abgedichtet.

Das erfindungsgemäße Gasdetektionsgerät umfasst weiterhin eine Strahlungsquelle, einen Mess-Detektor und einen Referenz-Detektor. Das erfindungsgemäße Gasdetektionsverfahren wird unter Verwendung eines solchen Gasdetektionsgeräts durchgeführt.

Die Strahlungsquelle emittiert Strahlung, und zwar sowohl in die Messkammer als auch in die Referenzkammer hinein. Die Strahlung ist insbesondere elektromagnetische Strahlung, beispielsweise Infrarotlicht, oder akustische Strahlung (Schall). Die emittierte Strahlung durchdringt sowohl die Messkammer als auch die Referenzkammer jeweils mindestens einmal, optional mehrmals, um den optischen Weg zu verlängern. Bezüglich der Strahlung, welche die Strahlungsquelle emittiert, sind die beiden Kammern parallel geschaltet, d.h. ein Teil der emittierten Strahlung erreicht die Messkammer, ohne zuvor die Referenzkammer durchdrungen zu haben, und umgekehrt erreicht ein anderer Teil der Strahlung die Referenzkammer, ohne zuvor die Messkammer durchdrungen zu haben.

Die emittierte Strahlung ist ausreichend breitbandig. Dies bedeutet: Die Strahlung weist ein Frequenzband auf. Idealerweise ist die Energie der emittierten Strahlung über dieses Frequenzband konstant. Für mindestens ein zu detektierendes Zielgas, bevorzugt für jedes zu detektierende Zielgas, umfasst das Frequenzband jeweils einen Frequenzband-Anteil. In diesem Frequenzband-Anteil schwächt dieses Zielgas wenigstens einen Teil der Strahlung ab. Diese Abschwächung lässt sich messen. Zwei verschiedene Frequenzband-Anteile können sich überlappen oder zueinander disjunkt sein.

Der Mess-Detektor erzeugt abhängig von seinen Messwerten ein zeitaufgelöstes Messsignal. Das Messsignal ist ein Maß für die Intensität der emittierten Strahlung, und zwar ein Maß für die Intensität, nachdem die Strahlung wenigstens einen Teil der Gasprobe in der Messkammer mindestens einmal durchdrungen hat und auf den Mess-Detektor auftrifft. Bevorzugt ist das Messsignal ein Maß für die Intensität der Strahlung, nachdem die Strahlung mindestens einmal die Messkammer vollständig durchdrungen hat, optional mehrmals.

Der Referenz-Detektor erzeugt abhängig von Messwerten ein zeitaufgelöstes Referenzsignal. Das Referenzsignal ist ein Maß für die Intensität der emittierten Strahlung, und zwar ein Maß für die Intensität, nachdem die Strahlung wenigstens einen Teil des Referenzgases in der Referenzkammer durchdrungen hat und auf den Referenz-Detektor auftrifft. Bevorzugt ist das Referenzsignal ein Maß für die Intensität der Strahlung, nachdem die Strahlung mindestens einmal die Referenzkammer vollständig durchdrungen hat. Bevorzugt beziehen die beiden Signale sich auf denselben Zeitraum und werden bevorzugt zu denselben Abtast-Zeitpunkten oder wenigstens mit derselben Abtast-Frequenz generiert.

Wenigstens dann, wenn die Gasprobe mindestens ein zu detektierendes Zielgas aufweist und daher dieses Zielgas auch in der Messkammer vorhanden ist, wird die emittierte Strahlung abgeschwächt, während sie die Messkammer durchdringt. Das Messsignal, welches der Mess-Detektor misst, ist ein Maß für die Intensität der Strahlung in der Messkammer. Ein Zielgas schwächt diese Intensität ab. Die Abschwächung der Strahlung und damit auch das Messsignal korrelieren mit der Zielgas-Konzentration in der Messkammer. Die emittierte Strahlung, welche die Referenzkammer durchdringt, kann in der Referenzkammer abgeschwächt werden, beispielsweise aufgrund von Umgebungsbedingungen, die sowohl auf die Messkammer als auch auf die Referenzkammer einwirken. Das Referenzsignal, welches der Referenz-Detektor misst, ist ein Maß für die Intensität der Strahlung in der Referenzkammer. Außerdem hängen oft sowohl das Messsignal als auch das Referenzsignal von Zuständen von Bestandteilen des Gasdetektionsgeräts ab, beispielsweise von einem Zustand der Strahlungsquelle oder einer Kammer oder einem Zustand einer optionalen eigenen Spannungsversorgungseinheit.

Die Gasdetektionsvorrichtung umfasst weiterhin eine Signalverarbeitungseinheit. Die Signalverarbeitungseinheit misst ein Maß für das Systemverhalten eines gedachten Systems. Dieses System wird mit dem Referenzsignal als dem Eingangssignal angeregt. Als Reaktion auf diese Anregung erzeugt das gedachte System das Messsignal als das Ausgangssignal. Das Systemverhalten beschreibt also, wie das gedachte System auf die Anregung durch das Eingangssignal reagiert. Die Signalverarbeitungseinheit berechnet das Maß für das Systemverhalten im Frequenzbereich. Bevorzugt berechnet die Signalverarbeitungseinheit als Maß für das Systemverhalten die Übertragungsfunktion (transfer function) des gedachten Systems im Frequenzbereich.

Die oben erwähnte Zielgas-Information wird durch Auswertung des berechneten Maßes für das Systemverhalten hergeleitet. Bevorzugt leitet die Signalverarbeitungseinheit die Zielgas-Information her. Möglich ist auch, dass die Signalverarbeitungseinheit das Maß für das Systemverhalten berechnet und eine räumlich entfernte Auswerteeinheit die Zielgas-Information herleitet.

Eine Grundlage der Erfindung ist also die folgende: Wenigstens in einer Zeitspanne, in der die Verfahrensschritte einmal durchgeführt werden, kann die Gasprobe in der Messkammer mit ausreichender Näherung als lineares zeitinvariantes System betrachtet werden. Das Messsignal y(t) wird als eine Systemantwort dieses gedachten Systems auf eine Anregung durch das Referenzsignal x(t) aufgefasst. Ein Maß für das Systemverhalten dieses Systems wird berechnet. Dieses Systemverhalten korreliert mit dem Vorhandensein oder der Abwesenheit von Zielgasen und mit der jeweiligen Zielgas-Konzentration. Das Maß für das Systemverhalten bezieht sich auf den Frequenzbereich.

Die Erfindung ermöglicht es, erfordert aber nicht, dass ein Benutzer ein Zielgas vorgibt, dessen Konzentration zu ermitteln ist. Vielmehr reicht es aus, wenn ein Frequenzband vorgegeben wird, wobei die Strahlung, welche eine Strahlungsquelle emittiert, in diesem Frequenzband durch das oder ein, idealerweise durch jedes zu detektierende Zielgas abgeschwächt oder sogar vollständig absorbiert wird. Idealerweise weist die Strahlung über das gesamte Frequenzband die gleiche Energie auf, dies ist aber nicht erforderlich.

In vielen Fällen vermag die Gasdetektionsvorrichtung die jeweilige Konzentration von mehreren Zielgasen zu ermitteln. Die Gefahr wird verringert, dass ein Zielgas nicht detektiert wird oder dass ein Fehlalarm ausgelöst wird. Die Erfindung ermöglicht es, erfordert es aber nicht, dass die Energie und / oder ein Frequenzband, mit / in der die Strahlungsquelle Strahlung emittiert, variiert wird, um verschiedene Zielgase detektieren zu können. Die Erfindung erfordert auch nicht, dass das Gasdetektionsgerät mehrere Messzellen und / oder verschiedene Wellenlängen-Filter für unterschiedliche Zielgase umfasst oder während eines Einsatzes umgeschaltet wird, um nacheinander verschiedene Zielgase erkennen zu können, oder unterschiedliche Mess-Detektoren umfasst. Erfindungsgemäß wird die Strahlung, welche die Strahlungsquelle emittiert, sowohl in die Messkammer als auch in die Referenzkammer geleitet. Idealerweise stimmt der zeitliche Verlauf der Intensität der Strahlung, die in die Messkammer eingeleitet (emittiert) wird, überein mit dem zeitlichen Verlauf der Strahlung, die in die Referenzkammer geleitet wird. Zu dieser gewünschten Wirkung trägt bei, dass die jeweilige Strahlung durch die beiden Kammern von derselben Strahlungsquelle stammt.

Erfindungsgemäß wird ein Maß für das Systemverhalten eines gedachten Systems berechnet. Um dieses Maß für das Systemverhalten zu berechnen, werden das Messsignal und das Referenzsignal verwendet, also zwei Signale, die gemessen werden, nachdem die emittierte Strahlung parallel beide Kammern und damit die Gasprobe bzw. das Referenzgas wenigstens teilweise durchdrungen hat. Die Strahlungsquelle wirkt idealerweise gleichartig auf beide Kammern ein, und die emittierte Strahlung überdeckt ein ausreichend breites Frequenzband. Die Erfindung erspart die Notwendigkeit, die Strahlungsquelle so zu regeln, dass der zeitliche Verlauf einer Größe, welche die emittierte Strahlung beschreibt, z.B. der Verlauf der Intensität in einem bestimmten Frequenzband oder der Verlauf des Frequenzgangs, einem vorgegebenen Verlauf folgt. Ausreichend ist, dass die Strahlung von jedem zu detektierenden Zielgas wenigstens in einem Teil des Frequenzbands ausreichend stark abgeschwächt wird.

Häufig altert die Strahlungsquelle, beispielsweise aufgrund von Abnutzung. Außerdem kann dann, wenn das Gasdetektionsgerät eine eigene Spannungsversorgungseinheit aufweist, die zur Verfügung stehende elektrische Energie im Laufe eines Einsatzes abnehmen. Die Erfindung ermöglicht es, trotz solcher Veränderungen die Gasprobe relativ zuverlässig zu analysieren. Ein wesentlicher Grund hierfür ist, dass das gedachte System, dessen Systemverhalten berechnet wird, vom Referenzsignal angeregt wird und als Reaktion auf die Anregung das Messsignal liefert. Häufig werden diese beiden Signale etwa gleichartig durch eine Veränderung der Strahlungsquelle und der Spannungsversorgungseinheit beeinflusst. Falls hingegen das gedachte System durch ein Signal angeregt werden würde, welches die Intensität der Strahlung vor dem Eintritt in die Kammern beschreibt, so würde das Systemverhalten in der Regel stärker vom aktuellen Zustand des Gasdetektionsgeräts abhängen.

Die Referenzkammer ist idealerweise frei von jedem zu detektierenden Zielgas. Umgebungsbedingungen, insbesondere Temperatur, Feuchte und Druck, sowie sonstige Störeinflüsse, beispielsweise Vibrationen, wirken hingegen in vielen Fällen etwa gleich auf beide Kammern. Daher und weil das Messsignal und das Referenzsignal verwendet werden, also zwei gemessene zeitliche Verläufe, kompensiert die Erfindung bis zu einem gewissen Grad den Einfluss der Umgebungsbedingungen. Dieser Vorteil wird nicht erzielt, wenn notwendigerweise die zeitlich veränderliche Intensität der emittierten Strahlung verwendet werden würde und daher bekannt sein müsste, wobei diese Intensität auftritt, bevor diese Strahlung eine Kammer erreicht. Die Erfindung setzt aber nicht voraus, dass beide Kammern völlig gleichartig auf Umgebungsbedingungen reagieren.

Das Messsignal hängt von der Zielgas-Konzentration sowie in der Regel von Umgebungseinflüssen ab, insbesondere von Temperatur, Druck, Feuchte und von Vibrationen. In vielen Fällen hängt das Systemverhalten relativ wenig von den Umgebungseinflüssen ab. Die Erfindung erspart die Notwendigkeit, den Einfluss einer Umgebungsbedingung oder einer sonstigen Störgröße messen oder modellieren zu müssen. Insbesondere ist es dank der Erfindung nicht erforderlich, ein Maß für das Systemverhalten eines Systems zu ermitteln, welches von einer Umgebungsbedingung oder einem sonstigen Störsignal angeregt wird und als Reaktion auf diese Anregung einen Anteil des Messsignals liefert, z.B. denjenigen Anteil, der nicht von der Zielgas-Konzentration verursacht wird. Ein solches Vorgehen erfordert häufig eine relativ gute Kenntnis, wie eine Umgebungsbedingung oder sonstige Störgröße sich auf das Messsignal auswirkt. Die Erfindung erspart die Notwendigkeit, einen solchen Einfluss vorab modellieren oder während des Einsatzes messen zu müssen.

Erfindungsgemäß vermag der Mess-Detektor ein Maß für die Intensität der emittierten Strahlung in der Messkammer zu messen. Der Referenz-Detektor vermag ein Maß für die Intensität der emittierten Strahlung in der Referenzkammer zu messen. Unterschiedliche Ausgestaltungen sind möglich, welches Maß für die Intensität die beiden Detektoren jeweils messen.

In einer Ausgestaltung durchdringt emittierte elektromagnetische Strahlung sowohl die Messkammer als auch die Referenzkammer mindestens einmal vollständig und trifft auf jeweils einen zugeordneten Photodetektor auf. Jeder Photodetektor ist beispielsweise in einer Wand der jeweiligen Kammer eingelassen. Ein Mess-Photodetektor misst ein Maß für die Intensität der auftreffenden Strahlung, nachdem diese Strahlung die Messkammer und damit eine Gasprobe in der Messkammer mindestens einmal vollständig durchdrungen hat und mindestens bei Vorliegen eines Zielgases in der Messkammer abgeschwächt worden ist. Entsprechend misst ein Referenz-Photodetektor ein Maß für die Intensität der auftreffenden Strahlung, nachdem diese Strahlung die Referenzkammer und damit das Referenzgas mindestens einmal vollständig durchdrungen hat.

Diese Ausgestaltung ist in vielen Fällen relativ unempfindlich gegenüber Vibrationen sowie der Umgebungstemperatur und dem Umgebungsdruck. Häufig lassen sich das Frequenzband und optional eine frequenz-abhängige Intensität der Strahlungsquelle so festlegen, dass Wassertröpfchen und daher auch die Umgebungsfeuchte einen relativ geringen Einfluss auf das Messsignal haben. Möglich ist auch, dass jeweils ein Wellenlängenfilter zwischen der Strahlungsquelle und dem Mess-Detektor und zwischen der Strahlungsquelle und dem Referenz-Detektor nur Strahlung in einem solchen Wellenlängenbereich passieren lässt, in dem mindestens ein zu detektierendes Zielgas Strahlung abschwächt.

**In** einer anderen Ausgestaltung löst die elektromagnetische Strahlung, welche die beiden Kammern durchdringt, in jeder Kammer jeweils einen physikalischen Effekt aus. Beispielsweise verändert die elektromagnetische Strahlung die Temperatur und / oder den Druck in der jeweiligen Kammer oder löst einen akustisch messbaren Effekt aus. Der physikalische Effekt, der in der Messkammer ausgelöst wird, korreliert mit der Intensität der Strahlung in der Messkammer und damit mit der gesuchten Zielgas-Konzentration. Der Mess-Detektor misst ein Maß für den physikalischen Effekt, den die Strahlung in der Messkammer ausgelöst hat, während die Strahlung die Messkammer durchdringt. Der Referenz-Detektor misst ein Maß für den physikalischen Effekt, den die Strahlung in der Referenzkammer ausgelöst hat.

Eine solche Ausgestaltung ist in vielen Fällen relativ unempfindlich gegenüber der Lichtstärke in der Umgebung.

Erfindungsgemäß durchdringt Strahlung, welche die Strahlungsquelle emittiert hat, einerseits die Messkammer und andererseits die Referenzkammer. Möglich ist, dass die emittierte Strahlung während eines Einsatzes durchgehend in beide Kammern hinein emittiert wird. Möglich ist auch, dass die emittierte Strahlung abwechselnd auf die Referenzkammer oder auf die Messkammer gelenkt wird. Bevorzugt wird die Strahlung gepulst emittiert, um elektrische Energie einzusparen. Bevorzugt verändert die Strahlung über die Zeit ihre Frequenz innerhalb des Frequenzbands, so dass das gesamte Frequenzband ausreichend gleichmäßig überdeckt wird.

In einer Ausgestaltung berechnet die Signalverarbeitungseinheit ein Maß für die Kreuzkorrelation. Die Kreuzkorrelation beschreibt im Zeitbereich die Ähnlichkeit zwischen den beiden Signalen y(t) (Messsignal) und x(t) (Referenzsignal). Insbesondere dann, wenn die Strahlungsquelle idealisiert Strahlung mit einer Intensität in der Form eines weißen Rauschsignals emittiert, korreliert die Kreuzkorrelation mit der Impulsantwort (impulse response) des gedachten Systems (Ausgangssignal als Reaktion auf die Anregung durch das Eingangssignal), also mit der Reaktion des gerade beschriebenen gedachten Systems auf eine Anregung durch einen Dirac-Impuls (Delta-Verteilung, Delta-Distribution). Falls die Strahlungsquelle ein ideal weißes Rauschsignal emittiert, was in der Praxis nicht möglich ist, so ist die Kreuzkorrelation sogar proportional zu dieser Impulsantwort. Um einem weißen Rauschsignal nahe zu kommen, wird bevorzugt in der Praxis ein breitbandiges Rauschsignal mit begrenzter Energie emittiert. Die Signalverarbeitungseinheit verwendet das Maß für die Kreuzkorrelation als Maß für das Systemverhalten oder berechnet das Maß für das Systemverhalten unter Verwendung der Kreuzkorrelation.

In einer bevorzugten Ausgestaltung transformiert die Signalverarbeitungseinheit das Maß für die Kreuzkorrelation aus dem Zeitbereich in den Frequenzbereich. Bevorzugt wird eine Fourier-Transformation oder eine sonstige Laplace-Transformation angewendet. Die jeweilige Konzentration des oder jedes Zielgases wird ermittelt, indem im Frequenzbereich die Ergebnisse der Transformation ausgewertet werden. Oder die Signalverarbeitungseinheit berechnet im Frequenzbereich die Übertragungsfunktion des gedachten Systems.

Diese Ausgestaltung hat insbesondere folgende Vorteile: In der Regel absorbiert jedes zu detektierende Zielgas Strahlung in mindestens einem bestimmten Frequenzbereich. Dieser Frequenzbereich unterscheidet sich häufig von Zielgas zu Zielgas und ist relativ schmalbandig. In welchem Frequenzband Strahlung absorbiert wird, hängt von dem Zielgas ab, also von dem Typ, aber idealerweise nicht von der Zielgas-Konzentration. Die Stärke der Abschwächung, also die Amplitude in diesem Frequenzband, hängt hingegen von der Zielgas-Konzentration ab. Daher wird bevorzugt die in den Frequenzbereich transformierte Kreuzkorrelation analysiert, und dadurch lassen sich sowohl der jeweilige Typ als auch die jeweilige Konzentration jedes Zielgases messen.

Häufig lässt sich dank der Erfindung sowohl feststellen, welche Typen von Zielgasen in der Gasprobe vorhanden sind, als auch für jeden Typ jeweils die Zielgas-Konzentration. Ein wesentlicher Grund ist der folgende: Das Maß für das Systemverhalten im Frequenzbereich beschreibt sowohl den Amplitudengang als auch den Phasengang, in der Regel im komplexen Zahlenbereich. Der Amplitudengang beschreibt die Abhängigkeit der Amplitude von der Frequenz, der Phasengang die Abhängigkeit der Phase von der Frequenz. Häufig unterscheidet sich der Phasengang von Zielgas-Typ zu Zielgas-Typ und hängt relativ wenig von der Zielgas-Konzentration ab, während der Amplitudengang stark von der Zielgas-Konzentration abhängt.

In einer Ausgestaltung werden für mehrere zu detektierende Zielgase jeweils ein Referenz-Phasengang und ein Referenz-Amplitudengang vorgegeben. Jeder Referenz-Phasengang und jeder Referenz-Amplitudengang werden beispielsweise vorab empirisch ermittelt und abgespeichert. Das Systemverhalten im Frequenzbereich wird sowohl mit jedem Referenz-Phasengang als auch mit jedem Referenz-Amplitudengang verglichen, um festzustellen, welches dieser Zielgase jeweils mit welcher Konzentration in der untersuchten Gasprobe vorhanden ist. Dieser Schritt kann selbstverständlich das Ergebnis erbringen, dass mindestens ein zu detektierendes Zielgas nicht mit einer Konzentration oberhalb einer unteren Schranke vorhanden ist.

**In** einer Ausgestaltung werden für mindestens ein, bevorzugt jedes vorgegebene Zielgas und für mindestens eine vorgegebene Konzentration dieses Zielgases folgende Schritte durchgeführt:
- Die Messkammer wird mit einer Referenz-Gasprobe gefüllt. Diese Referenz-Gasprobe enthält das Zielgas mit der vorgegebenen Konzentration. Die Referenz-Gasprobe ist frei von jedem anderen Zielgas. Bevorzugt wird diese Gasprobe aus dem zu überwachenden räumlichen Bereich entnommen.
- Das Maß für das Systemverhalten wird unter Verwendung dieser Referenz-Gasprobe und bevorzugt anderer Referenz-Gasproben ermittelt. Diese Ermittlung liefert ein Referenz-Systemverhaltens-Maß für dieses Zielgas.
- Bei dem Schritt, den Zielgas-Typ und die jeweilige Zielgas-Konzentrationen zu ermitteln, wird das Referenz-Systemverhaltens-Maß für dieses Zielgas verwendet. Bevorzugt wird es mit dem Maß für das Systemverhalten verglichen, wobei das berechnete Maß sich auf die zu untersuchende Gasprobe bezieht.

Diese Ausgestaltung ermöglicht es mit noch größerer Zuverlässigkeit, dass der Einfluss von Umgebungsbedingungen kompensiert wird. Weiterhin erspart die Ausgestaltung die Notwendigkeit, explizit für jedes Zielgas vorzugeben, in welchem Frequenzband dieses Zielgas Strahlung relevant abschwächt.

**In** einer Ausgestaltung ist die Gasdetektionsvorrichtung als ein tragbares Gerät ausgestaltet, welches ein Benutzer mit sich führt. Dieses tragbare Gerät umfasst weiterhin eine eigene Spannungsversorgungseinheit und eine Ausgabeeinheit, welche die Zielgas-Information in mindestens einer von einem Menschen wahrnehmbaren Form auszugeben vermag.

In einer anderen Ausgestaltung ist die Gasdetektionsvorrichtung als Gerät ausgestaltet, welches während eines Einsatzes an einem Ort verbleibt. Dieses an einem Ort verbleibende Gerät kann ebenfalls eine eigene Spannungsversorgungseinheit aufweisen oder mit einem Spannungsversorgungsnetz verbunden oder verbindbar sein. Bevorzugt übermittelt die stationäre Gasdetektionsvorrichtung eine Nachricht an einen räumlich entfernten Empfänger, wobei diese Nachricht ein Signal über eine gemessene Zielgas-Konzentration umfasst. Der Empfänger vermag bevorzugt die Nachricht auszugeben.

Erfindungsgemäß umfasst die Gasdetektionsvorrichtung das Gasdetektionsgerät sowie die Signalverarbeitungseinheit. In einer Ausgestaltung ist die Signalverarbeitungseinheit ein Bestandteil des Gasdetektionsgeräts.

In einer anderen Ausgestaltung ist die Signalverarbeitungseinheit ein Bestandteil einer Rechnereinheit, wobei diese Rechnereinheit ebenfalls zur Gasdetektionsvorrichtung gehört und vom Gasdetektionsgerät räumlich entfernt ist. Das Gasdetektionsgerät umfasst eine erste Kommunikationseinheit, die Rechnereinheit eine zweite Kommunikationseinheit. Mit Hilfe dieser beiden Kommunikationseinheiten wird wenigstens zeitweise eine Datenverbindung zwischen dem Gasdetektionsgerät und der Rechnereinheit hergestellt. Über diese Datenverbindung lassen sich Signale vom Gasdetektionsgerät zur Rechnereinheit und damit an die Signalverarbeitungseinheit übermitteln und in einer Realisierungsform umgekehrt Signale von der Rechnereinheit an das Gasdetektionsgerät.

Die Signalverarbeitungseinheit empfängt über diese Datenverbindung das Messsignal und das Referenzsignal und berechnet abhängig von den beiden empfangenen Signalen das Maß für das Systemverhalten und leitet die Zielgas-Information her. Bevorzugt umfasst die Rechnereinheit weiterhin eine Ausgabeeinheit, welche die Zielgas-Information in mindestens einer von einem Menschen wahrnehmbaren Form auszugeben vermag. Optional wird eine Zielgas-Information von der Rechnereinheit an das Gasdetektionsgerät übermittelt, und eine optionale Ausgabeeinheit des Gasdetektionsgeräts gibt die Zielgas-Information in mindestens einer von einem Menschen wahrnehmbaren Form aus.

In einer Abwandlung berechnet die Signalverarbeitungseinheit auf der räumlich entfernten Rechnereinheit das Maß für das Systemverhalten, und eine Auswerteeinheit des Gasdetektionsgeräts leitet hieraus die Zielgas-Information her.

Die Ausgestaltung mit der räumlich entfernten Rechnereinheit ermöglicht es, eine sehr leistungsfähige Signalverarbeitungseinheit bereitzustellen. Nicht erforderlich ist, dass diese leistungsfähige Signalverarbeitungseinheit zu einem als tragbares oder stationäres Gerät ausgestalteten Gasdetektionsgerät gehört. Dieselbe Rechnereinheit und damit dieselbe Signalverarbeitungseinheit können gleichzeitig mit mehreren Gasdetektionsgeräten verbunden sein.

Gemäß der gerade beschriebenen Ausgestaltung berechnet die räumlich entfernte Signalverarbeitungseinheit das Maß für das Systemverhalten. Ermöglicht wird, die Signalverarbeitungseinheit auf einer leistungsfähigen Rechnereinheit zu realisieren.

In einer Fortbildung dieser Ausgestaltung vermag das Gasdetektionsgerät unabhängig von der räumlich entfernten Signalverarbeitungseinheit zu entscheiden, ob die Gasprobe aus dem zu überwachenden räumlichen Bereich mindestens ein zu detektierendes Zielgas aufweist oder nicht. Gemäß dieser Fortbildung umfasst das Gasdetektionsgerät eine Auswerteeinheit. Diese Auswerteeinheit ermittelt ein Maß für die Abschwächung, welche das Zielgas in der Messkammer bewirkt. Diese Abschwächung wirkt sich auf Strahlung aus, welche von der Strahlungsquelle emittiert wird und mindestens einmal die Messkammer durchdringt. Um das Abschwächungs-Maß zu ermitteln, verwendet die Auswerteeinheit das Messsignal und das Referenzsignal. Falls in der Messkammer kein die Strahlung abschwächendes Zielgas vorhanden ist, so stimmt idealerweise das Messsignal mit dem Referenzsignal überein.

Diese Ausgestaltung ermöglicht es, dass einerseits die räumlich entfernte Signalverarbeitungseinheit gemäß der Erfindung das Maß für das Systemverhalten berechnet und auswertet und dadurch idealerweise für jedes in der Gasprobe vorhandenes Zielgas dessen jeweilige Zielgas-Konzentration berechnet und andererseits das Gasdetektionsgerät unabhängig von der Signalverarbeitungseinheit ein Zielgas detektiert und bevorzugt einen Benutzer des Gasdetektionsgeräts warnt. Dadurch wird sichergestellt, dass der Benutzer auch dann gewarnt wird, wenn die Datenverbindung mit der räumlich entfernten Rechnereinheit aktuell nicht hergestellt ist, und auch dann, wenn die Berechnung und Auswertung durch die Signalverarbeitungseinheit relativ viel Zeit in Anspruch nimmt.

Im Folgenden wird die Erfindung anhand eines Ausführungsbeispiels beschrieben. Hierbei zeigt
- Figur 1: den Transmissionsgrad von Methan in Abhängigkeit von der Wellenlänge;
- Figur 2: den Transmissionsgrad von Propan in Abhängigkeit von der Wellenlänge;
- Figur 3: schematisch den Aufbau der Gasdetektionsvorrichtung des Ausführungsbeispiels, wobei die Signalverarbeitungseinheit ein Bestandteil des Gasdetektionsgeräts ist;
- Figur 4: eine abweichende Ausgestaltung, bei der die Signalverarbeitungseinheit räumlich vom Gasdetektionsgerät entfernt ist.

Im Ausführungsbeispiel wird die Erfindung eingesetzt, um einen räumlichen Bereich auf mehrere verschiedene brennbare Zielgase zu untersuchen. Der räumliche Bereich ist beispielsweise ein Bereich einer Produktionsanlage oder Verkehrsanlage oder das Innere eines Gebäudes oder Fahrzeugs. In einer Ausgestaltung wird die jeweilige Konzentration jedes zu detektierenden Zielgases ermittelt, und bevorzugt wird eine Information über mindestens eine ermittelte Zielgas-Konzentration in mindestens einer von einem Menschen wahrnehmbaren Form ausgegeben. In einer anderen Ausgestaltung wird ein Alarm ausgegeben, wenn die gemessene Konzentration mindestens eines Zielgases oder die Summe der Zielgas-Konzentrationen oberhalb einer vorgegebenen Schranke liegt.

Die erfindungsgemäße Gasdetektionsvorrichtung des Ausführungsbeispiels umfasst ein Gasdetektionsgerät mit zwei Kammern. Unter einer "Kammer" wird ein Bauteil verstanden, welches ein Gas aufzunehmen vermag und - optional bis auf mindestens eine definierte Öffnung - von der Umgebung fluiddicht getrennt ist. Die eine Kammer, die Messkammer, steht wenigstens zeitweise in einer Fluidverbindung mit dem zu überwachenden Bereich und vermag eine zu untersuchende Gasprobe aus dem zu überwachenden räumlichen Bereich aufzunehmen. Die andere Kammer, die Referenzkammer, nimmt eine Referenz-Gasprobe auf, die frei von jedem Zielgas ist. Wenigstens dann, wenn der räumliche Bereich auf Zielgase zu überwachen ist, ist die Referenzkammer fluiddicht vom Bereich und auch fluiddicht von der Messkammer getrennt.

Auch die Referenz-Gasprobe kann aus dem räumlichen Bereich stammen. Die Referenz-Gasprobe gelangt dann aus dem räumlichen Bereich in die Referenzkammer, wenn feststeht, dass der räumliche Bereich aktuell kein Zielgas enthält. Bevorzugt ist die Referenzkammer wenigstens dann, wenn der räumliche Bereich mindestens ein Zielgas aufweist oder aufweisen kann, fluiddicht vom räumlichen Bereich abgetrennt. In einer Ausgestaltung wird erreicht, dass die beiden Gasproben in den beiden Kammern annähernd die gleiche Temperatur und Feuchte aufweisen. Dies ist aber nicht zwingend erforderlich.

Die Erfindung nutzt ein aus dem Stand der Technik bekanntes Prinzip aus, nämlich das folgende: Verschiedene Zielgase schwächen elektromagnetische und / oder akustische Strahlung ab. Ein Maß für die Abschwächung ist der spektrale Verlauf, ausgedrückt als Transmissionsgrad Tr in %, in Abhängigkeit von der Wellenlänge λ von Strahlung. Je geringer der Transmissionsgrad Tr[λ] ist, desto stärker schwächt das Zielgas die Strahlung ab.

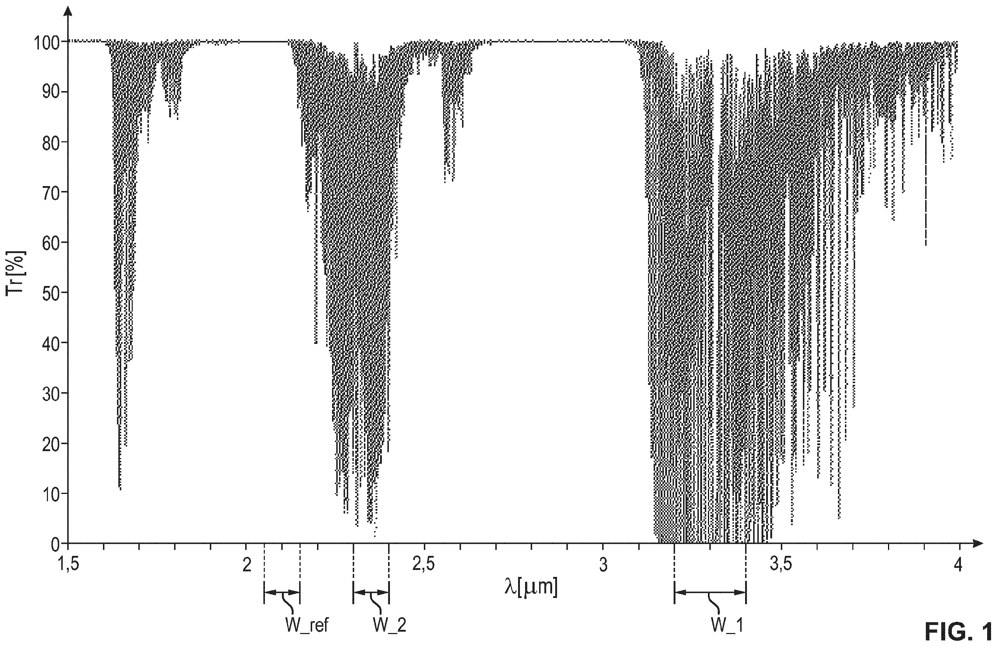

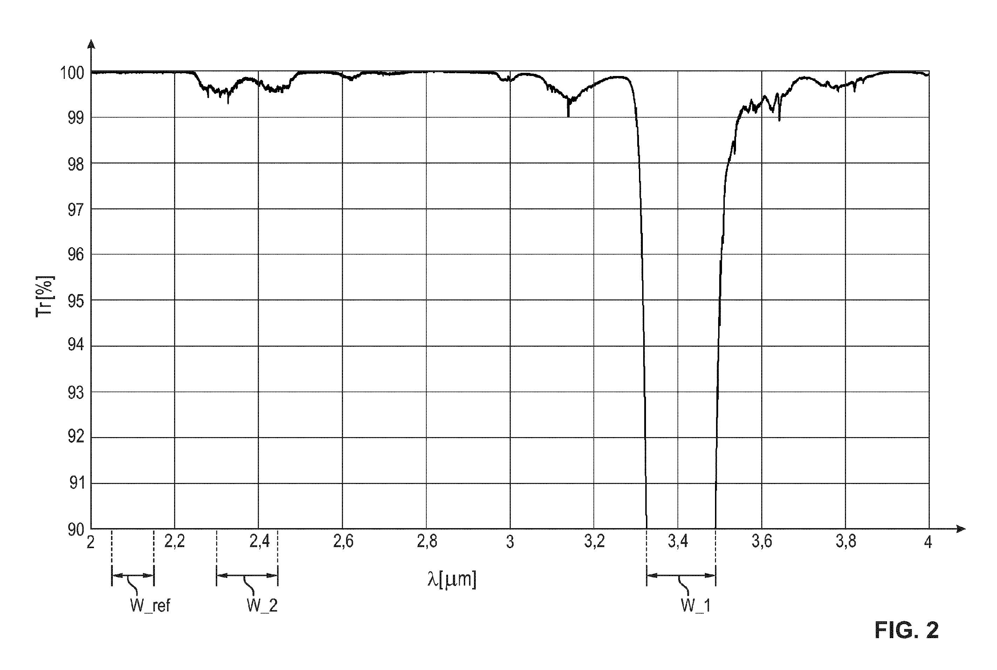

Figur 1 zeigt beispielhaft den spektralen Verlauf für den Kohlenwasserstoff Methan, Figur 2 den für Propan, und zwar jeweils bei einer beispielhaften Konzentration von Methan bzw. Propan. In diesem Beispiel durchdringt elektromagnetische Strahlung eine Gasprobe in einer Messkammer. Auf der x-Achse ist die Wellenlänge λ in [µm] aufgetragen, auf der y-Achse der Transmissionsgrad Tr in [%].

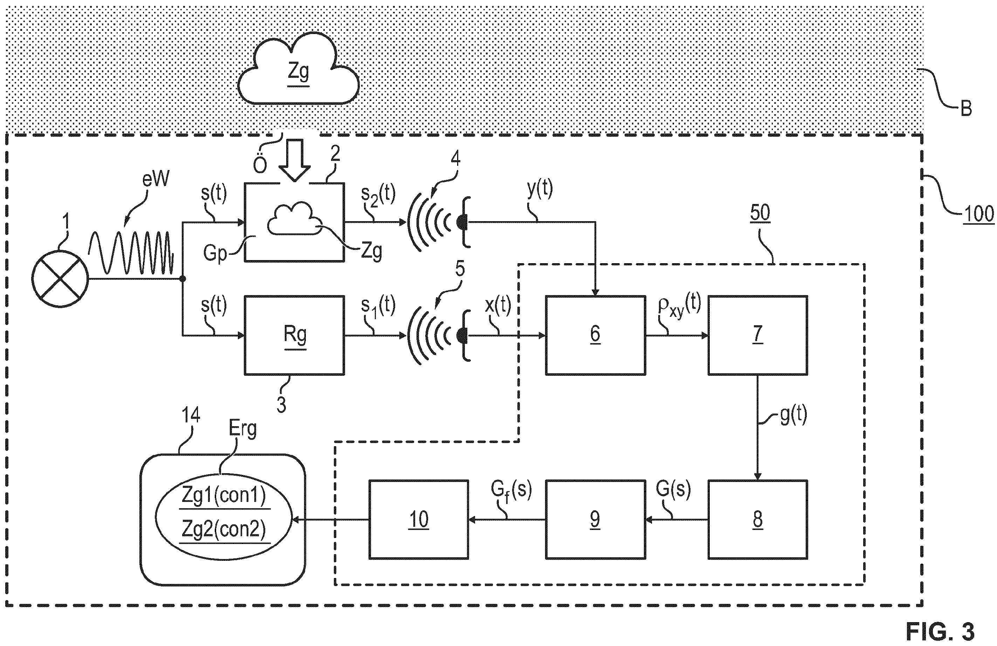

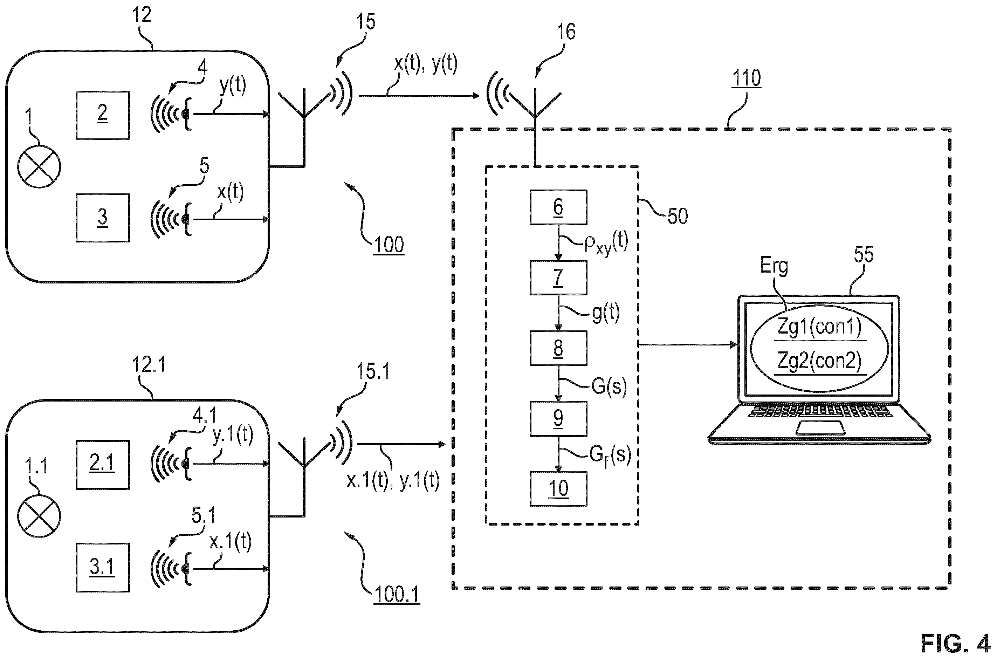

Figur 3 zeigt schematisch das Gasdetektionsgerät 100 des Ausführungsbeispiels. Das Gasdetektionsgerät 100 umfasst eine Messkammer 2, eine Referenzkammer 3 und eine Strahlungsquelle 1. Bei der Ausgestaltung gemäß Figur 3 fungiert das Gasdetektionsgerät 100 zugleich als die Gasdetektionsvorrichtung. Figur 4 zeigt eine abweichende Ausgestaltung.

Die Messkammer 2 steht über eine Öffnung Ö wenigstens zeitweise in einer Fluidverbindung mit dem zu überwachenden räumlichen Bereich B. Dieser Bereich B kann mindestens ein zu detektierendes Zielgas Zg aufweisen. Eine Gasprobe Gp fließt durch die Öffnung Ö aus dem Bereich B in die Messkammer 2, beispielsweise indem eine Pumpe oder eine sonstige Fluidfördereinheit die Gasprobe Gp ansaugt und / oder indem die Gasprobe Gp in die Messkammer 2 diffundiert.

Die Referenzkammer 3 ist mit einem Referenzgas Rg gefüllt. Erfindungsgemäß ist dieses Referenzgas Rg frei von dem oder jedem Zielgas Zg. Veränderliche Umgebungsbedingungen, insbesondere die Umgebungstemperatur, sowie Vibrationen wirken hingegen oft annähernd gleichartig auf beide Kammern 2 und 3.

Die Strahlungsquelle 1 emittiert Strahlung eW mit einem Frequenzband. In einer Realisierungsform emittiert die Strahlungsquelle 1 Infrarotstrahlung, in einer anderen Ausgestaltung Schall oder Ultraschall. Mit dem nachfolgend verwendeten Begriff "Strahlung" sollen nachfolgend insbesondere elektromagnetische Strahlung im sichtbaren Bereich, Infrarot-Bereich oder Ultraviolett-Bereich sowie akustische Strahlung (Schall und Ultraschall) umfasst sein.

Diese Strahlung eW durchdringt mindestens einmal, optional mehrmals die Messkammer 2. Das Gasdetektionsgerät 100 wendet ein Prinzip an, das aus dem Stand der Technik wohlbekannt ist. Das oder mindestens ein zu detektierendes Zielgas Zg in der Messkammer 2 schwächt die Strahlung eW in einem Frequenzbereich ab. Dieser Frequenzbereich unterscheidet sich in der Regel von Zielgas zu Zielgas und ist vorab bekannt. Die Intensität der jeweiligen Abschwächung hängt von der Zielgas-Konzentration ab. Der Frequenzbereich, in dem die Abschwächung stattfindet, hängt aber in der Regel nur vom Zielgas-Typ ab, aber nicht von der Zielgas-Konzentration. Ein Sensor misst ein Maß für die Intensität der auftreffenden Strahlung, nachdem die emittierte Strahlung eW die Messkammer 2 mindestens einmal durchdrungen hat. Dieses Maß für die Intensität korreliert mit der Zielgas-Konzentration.

Im Ausführungsbeispiel wird eine Menge von Zielgasen vorgegeben, die in dem zu überwachenden Bereich B auftreten können und die detektiert werden sollen. Die Strahlung eW, welche die Strahlungsquelle 1 emittiert, ist ausreichend breitbandig. Genauer gesagt: Das Frequenzband der emittierten Strahlung eW ist so groß (breit), dass das Frequenzband für jedes zu detektierenden Zielgas jeweils einen Frequenzbereich umfasst, in dem dieses Zielgas die Strahlung eW in messbarer Weise abschwächt. Daher bewirkt jedes zu detektierende Zielgas eine messbare Abschwächung der Strahlung eW.

In Figur 3 wird die zeitlich variierende Intensität der emittierten Strahlung eW durch ein Signal s(t) beschrieben. Dieses Signal s(t) beschreibt die Intensität der Strahlung eW, bevor die Strahlung eW die Kammern 2 und 3 erreicht, ist also ein Anregungssignal. Bevorzugt emittiert die Strahlungsquelle 1 die Strahlung eW dergestalt, dass das Anregungssignal s(t) sinusförmig mit über der Zeit variierender Frequenz ist (frequency sweep signal). In einer Realisierungsform emittiert die Strahlungsquelle 1 die Strahlung eW dergestalt, dass das Anregungssignal s(t) idealerweise ein weißes Rauschen ist. In der Realität lässt sich ein weißes Rauschen nur näherungsweise erreichen.

Die emittierte Strahlung eW wird dergestalt zu den beiden Kammern 2 und 3 geleitet, dass die Intensität der auftreffenden Strahlung eW für beide Kammern 2 und 3 mit ausreichender Genauigkeit durch das gleiche Anregungssignal s(t) beschrieben werden kann, vgl. Figur 3. Die Strahlung eW durchdringt beide Kammern 2 und 3 jeweils mindestens einmal. Die Intensität der Strahlung eW, welche die Messkammer 2 mindestens einmal durchdrungen hat, wird durch das Signal s₂(t) beschrieben. Die Intensität der Strahlung eW, welche die Referenzkammer 3 mindestens einmal durchdrungen hat, wird durch das Signal s₁(t) beschrieben.

Das Gasdetektionsgerät 100 analysiert die Gasprobe Gp in der Messkammer 2. Für die Dauer dieser Analyse wird die Gasprobe Gp als ein lineares zeitinvariantes System behandelt. Diese Annahme ist insbesondere deshalb in der Regel gerechtfertigt, weil sich die chemische Zusammensetzung der Gasprobe Gp in der Messkammer 2 und auch die chemische Zusammensetzung des Referenzgases Rg in der Referenzkammer 3 im Verlaufe der Analyse nicht wesentlich ändert.

Das Gasdetektionsgerät 100 umfasst weiterhin einen Mess-Detektor 4, der in oder an der Messkammer 2 angeordnet ist, und einen Referenz-Detektor 5, der in oder an der Referenzkammer 3 angeordnet ist. Beide Detektoren 4, 5 werden durch auftreffende Strahlung eW angeregt und liefern jeweils ein zeitaufgelöstes Signal. Der Mess-Detektor 4 liefert ein Signal, das als das Messsignal y(t) bezeichnet wird. Der Referenz-Detektor 5 liefert ein Signal, das als das Referenzsignal x(t) bezeichnet wird. Das Referenzsignal x(t) wird als das Eingangssignal für das gerade beschriebene lineare zeitinvariante System behandelt, das Messsignal y(t) als das Ausgangssignal.

Eine Signalverarbeitungseinheit 50 empfängt das Eingangssignal x(t) und das Ausgangssignal y(t), verarbeitet diese beiden Signale x(t), y(t) und liefert eine Zielgas-Information Erg. In der Ausgestaltung gemäß Figur 3 ist die Signalverarbeitungseinheit 50 ein Bestandteil des Gasdetektionsgeräts 100, und das Gasdetektionsgerät 100 umfasst weiterhin eine Ausgabeeinheit 14. Die Ausgabeeinheit 14 gibt die Zielgas-Information Erg visuell und / oder akustisch und / oder haptisch (durch Vibrationen) aus. Beispielhaft wird auf der Ausgabeeinheit 14 visuell die Zielgas-Information Erg gezeigt, dass die Gasprobe ein Zielgas Zg1 mit der Konzentration con1 sowie ein anderes Zielgas Zg2 mit der Konzentration con2 aufweist. Nachfolgend wird diese Signalverarbeitungseinheit 50 näher beschrieben.

Im Ausführungsbeispiel umfasst die Signalverarbeitungseinheit 50 mindestens einen Prozessor sowie folgende funktionale Bestandteile, die bevorzugt als Softwareprogramme ausgestaltet sind, die auf dem Prozessor ablaufen, während das Gasdetektionsgerät 100 eingesetzt wird:
- einen Kreuzkorrelator 6,
- einen optionalen Extrahierer 7,
- einen Transformierer 8,
- eine optionale Filtereinheit 9 und
- eine Analyseeinheit 10.

Der Kreuzkorrelator 6 berechnet ein Maß für die Kreuzkorrelation ρ_{xy} = ρ_{xy}(τ) zwischen dem Eingangssignal x(t) und dem Ausgangssignal y(t). Die Kreuzkorrelation ρ_{xy}(τ) beschreibt die Ähnlichkeit zwischen den beiden Signalen x(t) und y(t). Bekanntlich wird die Kreuzkorrelation ρ_{xy}(τ) im Zeitbereich gemäß der Formel ${ρ}_{xy} \left(τ\right) = \begin{matrix}lim \\ T \to ∞\end{matrix} \frac{1}{T} {\int }_{- T / 2}^{+ T / 2} x \left(t\right) y \left(t+τ\right) dt$ (1) berechnet.

Das Ausgangssignal y(t) eines linearen zeitinvarianten Systems hängt bekanntlich mit dem Eingangssignal x(t) durch die sogenannte Impulsantwort g(t) zusammen, nämlich gemäß der Formel $y \left(t\right) = g \left(t\right) * x \left(t\right) = {\int }_{- ∞}^{+ ∞} g \left(u\right) x \left(t-u\right) du$ (2)

Hierbei ist g(t) * x(t) die Faltung (convolution) zwischen den beiden Signalen g(t) und x(t).

Die Kreuzkorrelation ρ_{xy}(τ) hängt bekanntlich mit der Impulsantwort g(t) gemäß der Formel ${ρ}_{xy} \left(τ\right) = {\int }_{- ∞}^{+ ∞} g \left(u\right) {ρ}_{xx} \left(τ-u\right) du$ (3) zusammen. Hierbei ist ρₓₓ die Autokorrelationsfunktion des Eingangssignals x(t).

Auf Basis dieser Zusammenhänge generiert der Extrahierer 7 aus der Kreuzkorrelation ρ_{xy}(τ) die Impulsantwort g(t).

Der Transformierer 8 transformiert die Impulsantwort g(t) vom Zeitbereich in den Frequenzbereich, und zwar im Ausführungsbeispiel durch eine Laplace-Transformation. Durch diese Laplace-Transformation wird die Übertragungsfunktion G(s) der Impulsantwort g(t) berechnet. Bekanntlich wird die Laplace-Transformation der Impulsantwort g(t) gemäß der folgenden Rechenvorschrift berechnet: $G \left(s\right) = L \left\{g\left(t\right)\right\} = {\int }_{- ∞}^{+ ∞} g \left(t\right) exp \left(-s t\right) dt$ (4) mit s = σ+jω, wobei σ der Realteil, j die imaginäre Zahl und ω = 2πf die Kreisfrequenz ist. Der Imaginärteil jω beschreibt die Kreisfrequenz im Komplexen.

In einer alternativen Realisierung wird der folgende Zusammenhang ausgenutzt, um die Übertragungsfunktion G(s) zu berechnen: $G \left(s\right) = \frac{L \left\{y\left(t\right)\right\}}{L \left\{x\left(t\right)\right\}} .$ (5)

Bei dieser Ausgestaltung werden also die Laplace-Transformierte des Referenzsignals x(t) und die Laplace-Transformierte des Messsignals y(t) berechnet. Die Ausgestaltung vermeidet die Notwendigkeit, eine Kreuzkorrelation zu berechnen.

Die optionale Filtereinheit 9 berechnet aus der Übertragungsfunktion G(s) eine gefilterte Übertragungsfunktion G_{f}(s).

Die Analyseeinheit 10 analysiert die Übertragungsfunktion G(s) oder die gefilterte Übertragungsfunktion G_{f}(s). Sie ermittelt insbesondere den Amplitudengang und den Phasengang. Abhängig vom Phasengang ermittelt die Analyseeinheit 10, welche Zielgase in der Gasprobe Gp vorhanden sind. Abhängig vom Amplitudengang ermittelt die Analyseeinheit 10 mindestens, welche summierten Konzentrationen die Zielgase aufweisen, bevorzugt, welche Konzentration jeweils ein detektiertes Zielgas aufweist.

In einer Ausgestaltung wird eine Art Nullpunkt-Signal vorab berechnet und während des Einsatzes verwendet. Hierfür wird vorab ein Zustand hergestellt, bei dem die Messkammer 2 und die Referenzkammer 3 frei von jedem Zielgas sind, mit dem gleichen Gas gefüllt sind, beispielsweise beide mit dem Referenzgas Rg, oder beide annähernd ein Vakuum aufweisen.

In einer Ausgestaltung wird so wie oben beschrieben vorab eine Übertragungsfunktion berechnet, bei der die beiden Kammern 2 und 3 den gleichen bekannten Zustand aufweisen. Dies liefert eine Nullpunkt-Übertragungsfunktion G_{Null}(s). Im Einsatz wird dann eine Übertragungsfunktion G(s) berechnet. Um den Typ und / oder die Konzentration des oder jedes vorhandenen Zielgases zu ermitteln, wird die nullpunkt-korrigierte Übertragungsfunktion verwendet, z.B. die Differenz G(s) - G_{Null}(s).

Bei der Ausgestaltung gemäß Figur 3 ist die Signalverarbeitungseinheit 50 ein Bestandteil des Gasdetektionsgeräts 100, und das Gasdetektionsgerät 100 umfasst eine Ausgabeeinheit 14, auf der die Zielgas-Information Erg in einer von einem Menschen wahrnehmbaren Form ausgegeben wird. Figur 4 zeigt eine abweichende Ausgestaltung, bei der das Gasdetektionsgerät 100 nicht notwendigerweise eine leistungsfähige Signalverarbeitungseinheit 50 oder eine eigene Ausgabeeinheit 14 umfasst. In Figur 4 werden gezeigt:
- das Gasdetektionsgerät 100, das die in Figur 3 gezeigten Bestandteile außer der Signalverarbeitungseinheit 50 sowie ein Gehäuse 12 und eine erste Kommunikationseinheit 15 umfasst,
- ein weiteres Gasdetektionsgerät 100.1, das genauso wie das Gasdetektionsgerät 100 aufgebaut ist und ebenfalls eine Strahlungsquelle 1.1, zwei Kammern 2.1 und 3.1, zwei Detektoren 4.1 und 5.1, ein Gehäuse 12.1 und eine Kommunikationseinheit 15.1 umfasst, und
- eine Rechnereinheit 110, welche die Signalverarbeitungseinheit 50 sowie einen Ausgaberechner 55 und eine zweite Kommunikationseinheit 16 umfasst.

Die beiden Gasdetektionsgeräte 100, 100.1 sind beispielsweise an verschiedenen Positionen in einem zu überwachenden räumlichen Bereich B positioniert. Sie können mit einem stationären Spannungsversorgungsnetz verbunden sein oder jeweils eine eigene Spannungsversorgungseinheit aufweisen.

Die Signalverarbeitungseinheit 50 ist also räumlich entfernt von den Gasdetektionsgeräten 100, 100.1 angeordnet. Die Kommunikationseinheit 15 übermittelt das Eingangssignal x(t) und das Ausgangssignal y(t) vom Gasdetektionsgerät 100 an die Kommunikationseinheit 16. In der gezeigten Realisierungsform übermittelt die Kommunikationseinheit 15 Nachrichten drahtlos an die Kommunikationseinheit 16. Möglich ist auch, dass die Kommunikationseinheiten 15 und 16 über eine kabelgebundene Verbindung in einer Datenkommunikation stehen. Entsprechend übermittelt die Kommunikationseinheit 15.1 das Eingangssignal x.1(t) und das Ausgangssignal y.1(t) vom Gasdetektionsgerät 100.1 an dieselbe Kommunikationseinheit 16 der Rechnereinheit 110.

Die Signalverarbeitungseinheit 50 der Rechnereinheit 110 berechnet so wie oben mit Bezug auf Figur 3 beschrieben die Zielgas-Information Erg. Der Ausgaberechner 55 gibt die Zielgas-Information Erg aus. Auf gleiche Weise vermag der Ausgaberechner 55 auch eine Zielgas-Information vom weiteren Gasdetektionsgerät 100.1 auszugeben. Diese Ausgestaltung ermöglicht es, eine sehr leistungsfähige Signalverarbeitungseinheit 50 vorzusehen. Diese kann ein Bestandteil eines stationären Rechners sein.

### Bezugszeichenliste

| | |
|---|---|
| 1 | Strahlungsquelle, emittiert in beide Kammern 2 und 3 Strahlung eW, deren Intensität durch das Anregungssignal s(t) beschrieben wird |
| 2 | Messkammer, nimmt die Gasprobe Gp auf |
| 3 | Referenzkammer, nimmt das Referenzgas Rg auf |
| 4 | Mess-Detektor an der Messkammer 2, liefert das zeitaufgelöste Messsignal y(t) |
| 5 | Referenz-Detektor an der Referenzkammer 3, liefert das zeitaufgelöste Referenzsignal x(t) |
| 6 | Kreuzkorrelator, berechnet die Kreuzkorrelation ρ_{xy}(τ) zwischen dem Referenzsignal x(t) und dem Messsignal y(t) |
| 7 | Extrahierer, erzeugt aus der Kreuzkorrelation ρ_{xy}(τ) die Impulsantwort g(t) |
| 8 | Transformierer, transformiert die Impulsantwort g(t) aus dem Zeitbereich in den Frequenzbereich, liefert das Transformationsergebnis G(s) |
| 9 | Filtereinheit, erzeugt aus der Übertragungsfunktion G(s) die gefilterte Übertragungsfunktion G_{f}(s) |
| 10 | Analyseeinheit, analysiert die gefilterte Übertragungsfunktion G_{f}(s) im Frequenzbereich und liefert die Zielgas-Information Erg |
| 12 | Gehäuse des Gasdetektionsgeräts 100 |
| 14 | Ausgabeeinheit des Gasdetektionsgeräts 100 oder der Rechnereinheit 110, gibt die Zielgas-Information Erg visuell und / oder akustisch und / oder haptisch aus |
| 15 | Kommunikationseinheit des Gasdetektionsgeräts 100 |
| 15.1 | Kommunikationseinheit des Gasdetektionsgeräts 100.1 |
| 16 | Kommunikationseinheit der Rechnereinheit 110 |
| 50 | Signalverarbeitungseinheit, umfasst den Kreuzkorrelator 6, den Extrahierer 7, den Transformierer 8, die optionale Filtereinheit 9 und die Analyseeinheit 10, gehört in einer Ausgestaltung zum Gasdetektionsgerät 100 und in einer anderen Ausgestaltung zur Rechnereinheit 110 |
| 55 | Ausgaberechner mit Bildschirm, zeigt die Zielgas-Information Erg an |
| 100 | Gasdetektionsgerät, umfasst die Messkammer 2, die Referenzkammer 3, den Mess-Detektor 4, den Referenz-Detektor 5, die Strahlungsquelle 1, das Gehäuse 12, in einer Ausgestaltung die Signalverarbeitungseinheit 50 und in einer anderen Ausgestaltung die Kommunikationseinheit 15 |
| 100.1 | weiteres Gasdetektionsgerät, umfasst die Messkammer 2.1, die Referenzkammer 3.1, den Mess-Detektor 4.1, den Referenz-Detektor 5.1, die Strahlungsquelle 1.1, das Gehäuse 12.1 und die Kommunikationseinheit 15.1 |
| 110 | räumlich entfernte Rechnereinheit, umfasst die Signalverarbeitungseinheit 50, den Ausgaberechner 55 und die Kommunikationseinheit 16, mit den Gasdetektionsgeräten 100 und 100.1 verbunden |
| B | zu überwachender räumlicher Bereich, kann mindestens ein Zielgas Zg, Zg1, Zg2 aufweisen |
| con1, con2 | Konzentration des Zielgases Zg1, Zg2 |
| Erg | Zielgas-Information, von der Gasdetektionsvorrichtung 100, 50 oder der Recheneinheit 110 erzielt |
| eW | elektromagnetische oder akustische Strahlung, welche die Strahlungsquelle 1 sowohl in die Messkammer 2 als auch in die Referenzkammer 3 emittiert |
| Gp | Gasprobe in der Messkammer 2, stammt aus dem zu überwachenden Bereich B |
| g(t) | Impulsantwort im Zeitbereich, wird vom Extrahierer 7 aus der Kreuzkorrelation ρ_{xy}(τ) erzeugt |
| G(s) | Übertragungsfunktion des Systems, das als Reaktion auf eine Anregung durch das Referenzsignal x(t) das Messsignal y(t) liefert, wird vom Transformierer 8 geliefert |
| G_{f}(s) | gefilterte Übertragungsfunktion im Frequenzbereich, von der optionalen Filtereinheit 9 geliefert |
| GNull(S) | Nullpunkt-Übertragungsfunktion, wird einmal vorab bei einem Zustand frei von Zielgas berechnet |
| Ö | Öffnung in der Messkammer 2 |
| ρ_{XX}(t) | Autokorrelation des Referenzsignals x(t) |
| ρ_{xy}(τ) | Kreuzkorrelation im Zeitbereich zwischen dem Referenzsignal x(t) und dem Messsignal y(t), vom Kreuzkorrelator 6 berechnet |
| Rg | Referenzgas in der Referenzkammer 3, frei von jedem Zielgas |
| s(t) | Anregungssignal, das die zeitlich variierende Intensität der Strahlung eW, welche die Strahlungsquelle 1 sowohl in die Messkammer 2 als auch in die Referenzkammer 3 emittiert, beschreibt |
| s₁(t) | Signal, das die Intensität der Strahlung eW nach dem Durchdringen der Referenzkammer 3 beschreibt |
| s₂(t) | Signal, das die Intensität der Strahlung eW nach dem Durchdringen der Messkammer 2 beschreibt |
| x(t) | zeitaufgelöstes Referenzsignal, vom Referenz-Detektor 5 geliefert |
| y(t) | zeitaufgelöstes Messsignal, vom Mess-Detektor 4 geliefert |
| Zg, Zg1, Zg2 | Zielgas |

## Patentansprüche

1. Gasdetektionsvorrichtung (100, 110, 50) zum automatischen Analysieren einer Gasprobe (Gp) aus einem räumlichen Bereich (B) auf mindestens ein zu detektierendes Zielgas (Zg),
wobei die Gasdetektionsvorrichtung (100, 110, 50)
- ein Gasdetektionsgerät (100) und
- eine Signalverarbeitungseinheit (50)
umfasst,
wobei das Gasdetektionsgerät (100)
- eine Messkammer (2),
- eine Referenzkammer (3),
- eine Strahlungsquelle (1),
- einen Mess-Detektor (4) und
- einen Referenz-Detektor (5)
umfasst,
wobei die Messkammer (2) dazu ausgestaltet ist, eine Gasprobe (Gp) aus dem Bereich (B) aufzunehmen,
wobei die Referenzkammer (3) mit einem Referenzgas (Rg) gefüllt ist, das frei von dem oder jedem zu detektierenden Zielgas ist,
wobei die Strahlungsquelle (1) dazu ausgestaltet ist, eine Strahlung [eW, s(t)] sowohl in die Messkammer (2) als auch in die Referenzkammer (3) zu emittieren,
so dass emittierte Strahlung [eW, s(t)] beide Kammern (2, 3) jeweils mindestens einmal durchdringt,
wobei die beiden Kammern (2, 3) bezüglich der Strahlung [eW, s(t)] parallel angeordnet sind,
wobei das Frequenzband der emittieren Strahlung [eW, s(t)] für mindestens ein zu detektierendes Zielgas (Zg), bevorzugt für jedes zu detektierende Zielgas, jeweils einen Frequenzband-Anteil umfasst, in dem das Zielgas (Zg) wenigstens einen Teil der Strahlung [eW, s(t)] abschwächt,
wobei der Mess-Detektor (4) dazu ausgestaltet ist, ein zeitaufgelöstes Messsignal [y(t)] zu erzeugen, das ist ein Maß für die Intensität [s₂(t)] der emittierten Strahlung (eW), nachdem die Strahlung (eW) wenigstens einen Teil der Gasprobe (Gp) in der Messkammer (2) mindestens einmal durchdrungen hat,
wobei der Referenz-Detektor (5) dazu ausgestaltet ist, ein zeitaufgelöstes Referenzsignal [x(t)] zu erzeugen, das ist ein Maß für die Intensität [s₁(t)] der emittierten Strahlung (eW), nachdem die Strahlung (eW) wenigstens einen Teil des Referenzgases (Rg) in der Referenzkammer (3) mindestens einmal durchdrungen hat,
wobei die Signalverarbeitungseinheit (50) dazu ausgestaltet ist, im Frequenzbereich ein Maß [G_{f}(s)] für ein Systemverhalten [G(s)] eines Systems zu berechnen,
wobei dieses System mit dem Referenzsignal [x(t)] als dem Eingangssignal angeregt wird und dieses System als Reaktion auf diese Anregung das Messsignal [y(t)] als das Ausgangssignal erzeugt, und
wobei die Signalverarbeitungseinheit (50) dazu ausgestaltet ist, durch Auswertung des berechneten Maßes [G_{f}(s)] für das Systemverhalten [G(s)] eine Zielgas-Information (Erg) zu ermitteln,
wobei die ermittelte Zielgas-Information (Erg) mindestens eine der folgenden Informationen umfasst:
- wie groß die Summe der Konzentrationen der zu detektierenden Zielgase (Zg1, Zg2) in der Gasprobe (Gp) ist,
- welche Zielgase (Zg1, Zg2) in der Gasprobe (Gp) vorhanden sind,
- für mindestens ein, bevorzugt für jedes Zielgas ein Maß für die jeweilige Menge oder Konzentration (con1, con2) dieses Zielgases in der Gasprobe (Gp).

2. Gasdetektionsvorrichtung (100, 110, 50) nach Anspruch 1,
**dadurch gekennzeichnet, dass**
die Signalverarbeitungseinheit (50) einen Kreuzkorrelator (6) umfasst,
wobei der Kreuzkorrelator (6) dazu ausgestaltet ist, die Kreuzkorrelation [ρ_{xy}(τ)] im Zeitbereich zwischen dem Referenzsignal [x(t)] und dem Messsignal [y(t)] zu berechnen, und
wobei die Signalverarbeitungseinheit (50) dazu ausgestaltet ist, das Maß [G_{f}(s)] für das Systemverhalten [G(s)] unter Verwendung des Ergebnisses [G(s)] der Transformation der Kreuzkorrelation [ρ_{xy}(τ)] in den Frequenzbereich zu berechnen.

3. Gasdetektionsvorrichtung (100, 110, 50) nach einem der vorhergehenden Ansprüche,
**dadurch gekennzeichnet, dass**
die Signalverarbeitungseinheit (50) dazu ausgestaltet ist,
die Übertragungsfunktion [G(s)] des Systems im Frequenzbereich zu berechnen und das Maß [G_{f}(s)] für das Systemverhalten unter Verwendung der Übertragungsfunktion [G(s)] im Frequenzbereich zu berechnen,
insbesondere die Übertragungsfunktion [G(s)] im Frequenzbereich als das Maß [G_{f}(s)] für das Systemverhalten zu verwenden.

4. Gasdetektionsvorrichtung (100, 110, 50) nach einem der vorhergehenden Ansprüche,
**dadurch gekennzeichnet, dass**
die Gasdetektionsvorrichtung (100, 110, 50) eine Rechnereinheit (110) umfasst und
das Gasdetektionsgerät (100) eine erste Kommunikationseinheit (15) umfasst,
wobei die Rechnereinheit (110)
- räumlich vom Gasdetektionsgerät (100) entfernt angeordnet ist und
- eine zweite Kommunikationseinheit (16) umfasst,
wobei die Signalverarbeitungseinheit (50) ein Bestandteil der Rechnereinheit (110) ist und
wobei die Gasdetektionsvorrichtung (100, 110, 50) dazu ausgestaltet ist, unter Verwendung der beiden Kommunikationseinheiten (15, 16) das Messsignal [y(t)] und das Referenzsignal [x(t)] vom Gasdetektionsgerät (100) an die Signalverarbeitungseinheit (50) zu übermitteln.

5. Gasdetektionsvorrichtung (100, 110, 50) nach Anspruch 4,
**dadurch gekennzeichnet, dass**
die Gasdetektionsvorrichtung (100, 110, 50) dazu ausgestaltet ist,
unter Verwendung der beiden Kommunikationseinheiten (15, 16) die oder mindestens eine Zielgas-Information (Erg),
welche die Signalverarbeitungseinheit (50) abhängig vom übermittelten Messsignal [y(t)] und vom übermittelten Referenzsignal [x(t)] berechnet hat,
von der Signalverarbeitungseinheit (50) an das Gasdetektionsgerät (100) zu übermitteln, und
wobei die Gasdetektionsvorrichtung (100, 110, 50) bevorzugt dazu ausgestaltet ist,
- abhängig von der empfangenen Zielgas-Information (Erg) eine Meldung zu erzeugen und
- die erzeugte Meldung in mindestens einer von einem Menschen wahrnehmbaren Form auszugeben.

6. Gasdetektionsvorrichtung (100, 110, 50) nach Anspruch 4 oder Anspruch 5,
**dadurch gekennzeichnet, dass**
das Gasdetektionsgerät (100) eine Auswerteeinheit umfasst,
wobei die Auswerteeinheit dazu ausgestaltet ist,
- abhängig vom Messsignal [y(t)] und vom Referenzsignal [x(t)] ein Maß für eine Abschwächung, welche das oder mindestens ein zu detektierendes Zielgas in der Messkammer (2) bewirkt, zu messen und
- abhängig vom ermittelten Abschwächungs-Maß zu entscheiden, ob die Gasprobe das oder mindestens ein zu detektierendes Zielgas umfasst oder nicht.

7. Gasdetektionsverfahren zum automatischen Analysieren einer Gasprobe (Gp) aus einem räumlichen Bereich (B) auf mindestens ein zu detektierendes Zielgas (Zg), bevorzugt gleichzeitig auf mehrere zu detektierende Zielgase,
unter Verwendung eines Gasdetektionsgeräts (100), das
- eine Messkammer (2),
- eine Referenzkammer (3),
- eine Strahlungsquelle (1),
- einen Mess-Detektor (4) und
- einen Referenz-Detektor (5)
umfasst,
wobei die Referenzkammer (3) mit einem Referenzgas (Rg) gefüllt ist, das frei von dem oder jedem zu detektierenden Zielgas ist,
wobei die Messkammer (2) mit der Gasprobe (Gp) gefüllt wird oder ist und
wobei das Verfahren die automatisch durchgeführten Schritte umfasst, dass
- die Strahlungsquelle (1) eine Strahlung [eW, s(t)] sowohl in die Messkammer (2) als auch in die Referenzkammer (3) emittiert,
so dass emittierte Strahlung [eW, s(t)] beide Kammern (2, 3) jeweils mindestens einmal durchdringt,
wobei die beiden Kammern (2, 3) bezüglich der Strahlung [eW, s(t)] parallel angeordnet sind,
wobei das Frequenzband der emittieren Strahlung [eW, s(t)] für mindestens ein zu detektierendes Zielgas (Zg), bevorzugt für jedes zu detektierende Zielgas, jeweils einen Frequenzband-Anteil umfasst, in dem das Zielgas (Zg) wenigstens einen Teil der Strahlung [eW, s(t)] abschwächt,
- der Mess-Detektor (4) ein zeitaufgelöstes Messsignal [y(t)] erzeugt, das ist ein Maß für die Intensität [s₂(t)] der emittierten Strahlung (eW), nachdem die Strahlung (eW) wenigstens einen Teil der Gasprobe (Gp) in der Messkammer (2) mindestens einmal durchdrungen hat,
- der Referenz-Detektor (5) ein zeitaufgelöstes Referenzsignal [x(t)] erzeugt, das ist ein Maß für die Intensität [s₁(t)] der emittierten Strahlung (eW), nachdem die Strahlung (eW) wenigstens einen Teil des Referenzgases (Rg) in der Referenzkammer (3) mindestens einmal durchdrungen hat,
- im Frequenzbereich ein Maß [G_{f}(s)] für das Systemverhalten [G(s)] eines Systems berechnet wird,
wobei dieses System mit dem Referenzsignal [x(t)] als dem Eingangssignal angeregt wird und dieses System als Reaktion auf diese Anregung das Messsignal [y(t)] als das Ausgangssignal erzeugt,
wobei insbesondere das Maß [G_{f}(s)] für das Systemverhalten als Übertragungsfunktion [G(s)] im Frequenzbereich berechnet wird, und
- durch Auswertung des berechneten Maßes [G_{f} (s)] für das Systemverhalten [G(s)] eine Zielgas-Information (Erg) ermittelt wird,
wobei die Zielgas-Information (Erg) mindestens eine der folgenden Informationen umfasst:
- wie groß die Summe der Konzentrationen der zu detektierenden Zielgase in der Gasprobe (Gp) ist,
- welche Zielgase (Zg1, Zg2) in der Gasprobe (Gp) vorhanden sind,
- für mindestens ein, bevorzugt für jedes Zielgas ein Maß für die jeweilige Menge oder Konzentration (con1, con2) dieses Zielgases in der Gasprobe (Gp).

8. Gasdetektionsverfahren nach Anspruch 7,
**dadurch gekennzeichnet, dass**
der Schritt, das Maß [G_{f}(s)] für das Systemverhalten [G(s)] zu berechnen, die Schritte umfasst, dass
- die Kreuzkorrelation [ρ_{xy}(τ)] im Zeitbereich zwischen dem Referenzsignal [x(t)] und dem Messsignal [y(t)] berechnet wird,
- eine Transformation der Kreuzkorrelation [ρ_{xy}(τ)] in den Frequenzbereich durchgeführt wird und
- das Maß [G_{f}(s)] für das Systemverhalten [G(s)] unter Verwendung des Ergebnisses [G(s)] der Transformation der Kreuzkorrelation [ρ_{xy}(τ)] in den Frequenzbereich berechnet wird.

9. Gasdetektionsverfahren nach Anspruch 8,
**dadurch gekennzeichnet, dass**
der Schritt, das Maß [G_{f}(s)] für das Systemverhalten [G(s)] zu berechnen, den Schritt umfasst, dass
die Transformation der Kreuzkorrelation [ρ_{xy}(τ)] in den Frequenzbereich durch eine Laplace-Transformation oder eine Fourier-Transformation durchgeführt wird.

10. Gasdetektionsverfahren nach einem der Ansprüche 8 oder 9,
**dadurch gekennzeichnet, dass**
die Strahlungsquelle (1) die Strahlung [eW, s(t)] mit einem weißen Rauschen emittiert,
unter Verwendung des Ergebnisses [G(s)] der Transformation des Maßes für die Kreuzkorrelation [ρ_{xy}(τ)] in den Frequenzbereich die Übertragungsfunktion [G(s)] des Systems bei einer Anregung durch das Eingangssignal [x(t)] berechnet wird und
das Maß [G_{f}(s)] für das Systemverhalten unter Verwendung der Übertragungsfunktion [G(s)] berechnet wird.

11. Gasdetektionsverfahren nach einem der Ansprüche 7 bis 10,
**dadurch gekennzeichnet, dass**
vorab die Schritte durchgeführt werden, dass
- die Messkammer (2) mit einer Referenz-Gasprobe aus dem räumlichen Bereich (B) gefüllt wird, wobei die Referenz-Gasprobe frei von jedem Zielgas ist,
- als ein Nullpunkt-Systemverhaltens-Maß das Maß für das Systemverhalten unter Verwendung der Referenz-Gasprobe berechnet wird und
- bei einem Einsatz des Gasdetektionsgeräts (100) das Nullpunkt-Systemverhaltens-Maß von dem Systemverhaltens-Maß [G_{f}(s)] subtrahiert wird.

12. Gasdetektionsverfahren nach einem der Ansprüche 7 bis 11,
**dadurch gekennzeichnet, dass**
eine Menge mit mindestens einem zu detektierenden Zielgas vorgegeben ist oder wird, bevorzugt mit mehreren zu detektierenden Zielgasen, und
für das oder jedes Zielgas der Menge und für mindestens eine vorgegebene Konzentration dieses Zielgases die Schritte durchgeführt werden, dass
- die Messkammer (2) mit einer Gasprobe gefüllt wird, die dieses Zielgas mit der vorgegebenen Konzentration enthält, bevorzugt mit einer Gasprobe aus dem räumlichen Bereich (B), und frei von dem oder jedem anderen Zielgas ist,
- das Maß für das Systemverhalten unter Verwendung dieser Gasprobe ermittelt wird, so dass ein Referenz-Systemverhaltens-Maß für dieses Zielgas ermittelt wird, und
- bei der Ermittlung der Zielgas-Konzentrationen das Referenz-Systemverhaltens-Maß für dieses Zielgas verwendet wird.

13. Gasdetektionsverfahren nach einem der Ansprüche 7 bis 12,
**dadurch gekennzeichnet, dass**
als Referenzgas (Rg) eine Gasprobe aus dem räumlichen Bereich (B) verwendet wird, die frei von dem oder jedem zu detektierenden Zielgas ist.

## Claims

1. Gas detection apparatus (100, 110, 50) for automatically analyzing a gas sample (Gp) from a spatial region (B) for at least one target gas (Zg) to be detected,
wherein the gas detection apparatus (100, 110, 50) comprises
- a gas detection device (100) and
- a signal processing unit (50),
wherein the gas detection device (100) comprises
- a measuring chamber (2),
- a reference chamber (3),
- a radiation source (1),
- a measuring detector (4) and
- a reference detector (5),
wherein the measuring chamber (2) is configured to receive a gas sample (Gp) from the region (B),
wherein the reference chamber (3) is filled with a reference gas (Rg) that is free of the or each target gas to be detected,
wherein the radiation source (1) is configured to emit radiation [eW, s(t)] into both the measuring chamber (2) and the reference chamber (3)
so that emitted radiation [eW, s(t)] penetrates each of the two chambers (2, 3) at least once,
wherein the two chambers (2, 3) are arranged in parallel with respect to the radiation [eW, s(t)],
wherein the frequency band of the emitted radiation [eW, s(t)] for at least one target gas (Zg) to be detected, preferably for each target gas to be detected, comprises a frequency band portion in which the target gas (Zg) attenuates at least part of the radiation [eW, s(t)],
wherein the measuring detector (4) is configured to generate a time-resolved measurement signal [y(t)], which is an indicator for the intensity [s₂(t)] of the emitted radiation (eW), after the radiation (eW) has penetrated at least part of the gas sample (Gp) in the measuring chamber (2) at least once,
wherein the reference detector (5) is configured to generate a time-resolved reference signal [x(t)], which is an indicator for the intensity [s₁(t)] of the emitted radiation (eW), after the radiation (eW) has penetrated at least part of the reference gas (Rg) in the reference chamber (3) at least once,
wherein the signal processing unit (50) is configured to calculate an indicator [G_{f}(s)] for a system behavior [G(s)] of a system in the frequency range,
wherein this system is stimulated with the reference signal [x(t)] as the input signal and this system generates the measurement signal [y(t)] as the output signal in response to this stimulation, and
wherein the signal processing unit (50) is configured to determine target gas information (Erg) by assessing the calculated indicator [G_{f}(s)] for the system behavior [G(s)],
wherein the determined target gas information (Erg) comprises at least one of the following pieces of information:
- how large the sum of the concentrations of the target gases to be detected (Zg1, Zg2) in the gas sample (Gp) is,
- which target gases (Zg1, Zg2) are present in the gas sample (Gp),
- for at least one, preferably for each, target gas, an indicator for the relevant quantity or concentration (con1, con2) of this target gas in the gas sample (Gp).

2. Gas detection apparatus (100, 110, 50) according to claim 1,
**characterized in that**
the signal processing unit (50) comprises a cross-correlator (6),
the cross-correlator (6) being configured to calculate the cross-correlation [ρ_{xy}(τ)] in the time range between the reference signal [x(t)] and the measurement signal [y(t)], and
the signal processing unit (50) being configured to calculate the indicator [G_{f}(s)] for the system behavior [G(s)] using the result [G(s)] of the transformation of the cross-correlation [ρ_{xy}(τ)] into the frequency range.

3. Gas detection apparatus (100, 110, 50) according to either of the preceding claims,
**characterized in that**
the signal processing unit (50) is configured to
calculate the transfer function [G(s)] of the system in the frequency range and calculate the indicator [G_{f}(s)] for the system behavior using the transfer function [G(s)] in the frequency range,
in particular use the transfer function [G(s)] in the frequency range as the indicator [G_{f}(s)] for the system behavior.

4. Gas detection apparatus (100, 110, 50) according to any of the preceding claims,
**characterized in that**
the gas detection apparatus (100, 110, 50) comprises a computer unit (110) and
the gas detection device (100) comprises a first communication unit (15),
the computer unit (110)
- being arranged spatially removed from the gas detection device (100) and
- comprising a second communication unit (16),
the signal processing unit (50) being a component of the computer unit (110) and
the gas detection apparatus (100, 110, 50) being configured to transmit the measurement signal [y(t)] and the reference signal [x(t)] from the gas detection device (100) to the signal processing unit (50) using the two communication units (15, 16).

5. Gas detection apparatus (100, 110, 50) according to claim 4,
**characterized in that**
the gas detection apparatus (100, 110, 50) is configured to
transmit the or at least one piece of target gas information (Erg),
which the signal processing unit (50) has calculated depending on the transmitted measurement signal [y(t)] and on the transmitted reference signal [x(t)],
from the signal processing unit (50) to the gas detection device (100) using the two communication units (15, 16), and
the gas detection apparatus (100, 110, 50) preferably being configured to
- generate a message, depending on the target gas information (Erg) received, and
- output the generated message in at least one form perceivable by a human.

6. Gas detection apparatus (100, 110, 50) according to claim 4 or claim 5,
**characterized in that**
the gas detection device (100) comprises an evaluation unit,
the evaluation unit (5) being configured to
- measure an indicator for an attenuation which causes the or at least one target gas to be detected in the measuring chamber (2), depending on the measurement signal [y(t)] and on the reference signal [x(t)], and
- decide whether the gas sample comprises the or at least one target gas to be detected or not, depending on the determined attenuation indicator.

7. Gas detection method for automatically analyzing a gas sample (Gp) from a spatial region (B) for at least one target gas (Zg) to be detected, preferably simultaneously for a plurality of target gases to be detected,
using a gas detection device (100) comprising
- a measuring chamber (2),
- a reference chamber (3),
- a radiation source (1),
- a measuring detector (4) and
- a reference detector (5),
wherein the reference chamber (3) is filled with a reference gas (Rg) that is free of the or each target gas to be detected,
wherein the measuring chamber (2) is filled with the gas sample (Gp) and
wherein the method comprises the following automatically performed steps:
- the radiation source (1) emits a radiation [eW, s(t)] both into the measuring chamber (2) and into the reference chamber (3) so that emitted radiation [eW, s(t)] penetrates each of the two chambers (2, 3) at least once,
wherein the two chambers (2, 3) are arranged in parallel with respect to the radiation [eW, s(t)],
wherein the frequency band of the emitted radiation [eW, s(t)] for at least one target gas (Zg) to be detected, preferably for each target gas to be detected, comprises a frequency band portion in which the target gas (Zg) attenuates at least part of the radiation [eW, s(t)],
- the measuring detector (4) generates a time-resolved measurement signal [y(t)], which is an indicator for the intensity [s₂(t)] of the emitted radiation (eW), after the radiation (eW) has penetrated at least part of the gas sample (Gp) in the measuring chamber (2) at least once,
- the reference detector (5) generates a time-resolved reference signal [x(t)], which is an indicator for the intensity [s₁(t)] of the emitted radiation (eW), after the radiation (eW) has penetrated at least part of the reference gas (Rg) in the reference chamber (3) at least once,
- an indicator [G_{f}(s)] for the system behavior [G(s)] of a system in the frequency range is calculated,
wherein this system is stimulated with the reference signal [x(t)] as the input signal and this system generates the measurement signal [y(t)] as the output signal in response to this stimulation,
wherein in particular the indicator [G_{f}(s)] is calculated for the system behavior as a transfer function [G(s)] in the frequency range, and
- target gas information (Erg) is determined by evaluating the calculated indicator [G_{f} (s)] for the system behavior [G(s)],
wherein the target gas information (Erg) comprises at least one of the following pieces of information:
- how large the sum of the concentrations of the target gases to be detected in the gas sample (Gp) is,
- which target gases (Zg1, Zg2) are present in the gas sample (Gp),
- for at least one, preferably for each, target gas, an indicator for the relevant quantity or concentration (con1, con2) of this target gas in the gas sample (Gp).

8. Gas detection method according to claim 7,
**characterized in that**
the step of calculating the indicator [G_{f}(s)] for the system behavior [G(s)] comprises the following steps:
- the cross-correlation [ρ_{xy}(τ)] in the time range between the reference signal [x(t)] and the measurement signal [y(t)] is calculated,
- a transformation of the cross-correlation [ρ_{xy}(τ)] into the frequency range is carried out and
- the indicator [G_{f}(s)] for the system behavior [G(s)] is calculated using the result [G(s)] of the transformation of the cross-correlation [ρ_{xy}(τ)] into the frequency range.

9. Gas detection method according to claim 8,
**characterized in that**
the step of calculating the indicator [G_{f}(s)] for the system behavior [G(s)] comprises the following step:
the transformation of the cross-correlation [ρ_{xy}(τ)] into the frequency range is carried out by a Laplace transformation or a Fourier transformation.

10. Gas detection method according to either of claims 8 or 9,
**characterized in that**
the radiation source (1) emits the radiation [eW, s(t)] with a white noise,
using the result [G(s)] of the transformation of the indicator for the cross-correlation [ρ_{xy}(τ)] into the frequency range, the transfer function [G(s)] of the system is calculated upon stimulation by the input signal [x(t)] and
the indicator [G_{f}(s)] for the system behavior is calculated using the transfer function [G(s)].

11. Gas detection method according to any of claims 7 to 10,
**characterized in that**
the following steps are carried out in advance:
- the measuring chamber (2) is filled with a reference gas sample from the spatial region (B), the reference gas sample being free of each target gas,
- the indicator for the system behavior is calculated as a zero point system behavior indicator using the reference gas sample and
- when the gas detection device (100) is used, the zero point system behavior indicator is subtracted from the system behavior indicator [G_{f}(s)].

12. Gas detection method according to any of claims 7 to 11,
**characterized in that**
a quantity containing at least one target gas to be detected, preferably containing a plurality of target gases to be detected, is specified, and
for the or each target gas of the quantity and for at least one specified concentration of this target gas, the following steps are carried out:
- the measuring chamber (2) is filled with a gas sample that contains this target gas with the specified concentration, preferably with a gas sample from the spatial region (B), and is free of the or each other target gas,
- the indicator for the system behavior is determined using this gas sample so that a reference system behavior indicator for this target gas is determined, and
- the reference system behavior indicator for this target gas is used to determine the target gas concentrations.

13. Gas detection method according to any of claims 7 to 12,
**characterized in that**
a gas sample which is from the spatial region (B) and is free of the or each target gas to be detected is used as the reference gas (Rg).

## Revendications

1. Dispositif de détection de gaz (100, 110, 50) pour l'analyse automatique d'un échantillon de gaz (Gp) provenant d'une zone (B) spatiale pour rechercher au moins un gaz cible (Zg) à détecter,
dans lequel le dispositif de détection de gaz (100, 110, 50) comprend
- un appareil de détection de gaz (100) et
- une unité de traitement de signaux (50),
dans lequel l'appareil de détection de gaz (100) comprend
- une chambre de mesure (2),
- une chambre de référence (3),
- une source de rayonnement (1),
- un détecteur de mesure (4) et
- un détecteur de référence (5),
dans lequel la chambre de mesure (2) est conçue pour recevoir un échantillon de gaz (Gp) provenant de la zone (B),
dans lequel la chambre de référence (3) est remplie d'un gaz de référence (Rg) qui est exempt du ou de chaque gaz cible à détecter,
dans lequel la source de rayonnement (1) est configurée pour émettre un rayonnement [eW, s(t)] à la fois dans la chambre de mesure (2) et dans la chambre de référence (3),
de sorte que le rayonnement [eW, s(t)] émis traverse les deux chambres (2, 3) respectivement au moins une fois,
dans lequel les deux chambres (2, 3) sont disposées parallèlement par rapport au rayonnement [eW, s(t)],
dans lequel la bande de fréquences du rayonnement [eW, s(t)] émis pour au moins un gaz cible (Zg) à détecter, de préférence pour chaque gaz cible à détecter, comprend respectivement une partie de bande de fréquences dans laquelle le gaz cible (Zg) atténue au moins une partie du rayonnement [eW, s(t)],
dans lequel le détecteur de mesure (4) est configuré pour générer un signal de mesure [y(t)] résolu dans le temps qui est une mesure de l'intensité [s₂(t)] du rayonnement (eW) émis après que le rayonnement (eW) a traversé au moins une fois au moins une partie de l'échantillon de gaz (Gp) dans la chambre de mesure (2),
dans lequel le détecteur de référence (5) est configuré pour générer un signal de référence [x(t)] résolu dans le temps qui est une mesure de l'intensité [s₁(t)] du rayonnement (eW) émis après que le rayonnement (eW) a traversé au moins une fois au moins une partie du gaz de référence (Rg) dans la chambre de référence (3),
dans lequel l'unité de traitement de signaux (50) est configurée pour calculer, dans le domaine fréquentiel, une mesure [G_{f}(s)] d'un comportement de système [G(s)] d'un système,
dans lequel ledit système est excité par le signal de référence [x(t)] en tant que signal d'entrée et ledit système génère le signal de mesure [y(t)] en tant que signal de sortie en réponse à ladite excitation, et
dans lequel l'unité de traitement de signaux (50) est configurée pour déterminer des informations de gaz cible (Erg) en évaluant la mesure [G_{f}(s)] calculée du comportement de système [G(s)],
dans lequel les informations de gaz cible (Erg) déterminées comprennent au moins l'une des informations suivantes :
- quelle est la somme des concentrations de gaz cibles (Zg1, Zg2) à détecter dans l'échantillon de gaz (Gp),
- quels gaz cibles (Zg1, Zg2) sont présents dans l'échantillon de gaz (Gp),
- pour au moins un gaz cible, de préférence pour chaque gaz cible, une mesure de la quantité ou de la concentration respective (con1, con2) dudit gaz cible dans l'échantillon de gaz (Gp).

2. Dispositif de détection de gaz (100, 110, 50) selon la revendication 1,
**caractérisé en ce que**
l'unité de traitement de signaux (50) comprend un dispositif de corrélation croisée (6),
dans lequel le dispositif de corrélation croisée (6) est configuré pour calculer la corrélation croisée [ρ_{xy}(τ)] dans le domaine temporel entre le signal de référence [x(t)] et le signal de mesure [y(t)] et
dans lequel l'unité de traitement de signaux (50) est configurée pour calculer la mesure [G_{f}(s)] du comportement de système [G(s)] à l'aide du résultat [G(s)] de la transformation de la corrélation croisée [ρ_{xy}(τ)] dans le domaine fréquentiel.

3. Dispositif de détection de gaz (100, 110, 50) selon l'une des revendications précédentes,
**caractérisé en ce que**
l'unité de traitement de signaux (50) est configurée pour
calculer la fonction de transfert [G(s)] du système dans le domaine fréquentiel et calculer la mesure [G_{f}(s)] du comportement de système à l'aide de la fonction de transfert [G(s)] dans le domaine fréquentiel,
utiliser en particulier la fonction de transfert [G(s)] dans le domaine fréquentiel comme mesure [G_{f}(s)] du comportement de système.

4. Dispositif de détection de gaz (100, 110, 50) selon l'une des revendications précédentes,
**caractérisé en ce que**
le dispositif de détection de gaz (100, 110, 50) comprend une unité de calcul (110) et
l'appareil de détection de gaz (100) comprend une première unité de communication (15),
dans lequel l'unité de calcul (110)
- est disposée à distance spatialement de l'appareil de détection de gaz (100) et
- comprend une seconde unité de communication (16),
dans lequel l'unité de traitement de signaux (50) fait partie de l'unité de calcul (110) et
dans lequel le dispositif de détection de gaz (100, 110, 50) est configuré pour transmettre le signal de mesure [y(t)] et le signal de référence [x(t)] de l'appareil de détection de gaz (100) à l'unité de traitement de signaux (50) à l'aide des deux unités de communication (15, 16).

5. Dispositif de détection de gaz (100, 110, 50) selon la revendication 4,
**caractérisé en ce que**
le dispositif de détection de gaz (100, 110, 50) est configuré pour
à l'aide des deux unités de communication (15, 16), transmettre les informations de gaz cible ou au moins une information de gaz cible (Erg),
que l'unité de traitement de signaux (50) a calculée en fonction du signal de mesure [y(t)] transmis et du signal de référence [x(t)] transmis,
de l'unité de traitement de signaux (50) à l'appareil de détection de gaz (100), et
dans lequel le dispositif de détection de gaz (100, 110, 50) est de préférence configuré pour
- générer un message en fonction des informations de gaz cible (Erg) reçues et
- délivrer en sortie le message généré sous au moins une forme perceptible par un être humain.

6. Dispositif de détection de gaz (100, 110, 50) selon la revendication 4 ou la revendication 5,
**caractérisé en ce que**
l'appareil de détection de gaz (100) comprend une unité d'évaluation,
dans lequel l'unité d'évaluation est configurée pour
- mesurer, en fonction du signal de mesure [y(t)] et du signal de référence [x(t)], une mesure d'une atténuation que le ou au moins un gaz cible à détecter provoque dans la chambre de mesure (2), et
- décider, en fonction de la mesure d'atténuation déterminée, si l'échantillon de gaz comprend ou non le ou au moins un gaz cible à détecter.

7. Procédé de détection de gaz pour l'analyse automatique d'un échantillon de gaz (Gp) provenant d'une zone (B) spatiale pour rechercher au moins un gaz cible (Zg) à détecter, de préférence pour rechercher simultanément plusieurs gaz cibles à détecter,
à l'aide d'un appareil de détection de gaz (100) comprenant
- une chambre de mesure (2),
- une chambre de référence (3),
- une source de rayonnement (1),
- un détecteur de mesure (4) et
- un détecteur de référence (5),
dans lequel la chambre de référence (3) est remplie d'un gaz de référence (Rg) qui est exempt du ou de chaque gaz cible à détecter,
dans lequel la chambre de mesure (2) est remplie de l'échantillon de gaz (Gp) et
dans lequel le procédé comprend les étapes exécutées automatiquement selon lesquelles
- la source de rayonnement (1) émet un rayonnement [eW, s(t)] à la fois dans la chambre de mesure (2) et dans la chambre de référence (3), de sorte qu'un rayonnement [eW, s(t)] émis traverse les deux chambres (2, 3) respectivement au moins une fois,
dans lequel les deux chambres (2, 3) sont disposées parallèlement par rapport au rayonnement [eW, s(t)],
dans lequel la bande de fréquences du rayonnement [eW, s(t)] émis pour au moins un gaz cible (Zg) à détecter, de préférence pour chaque gaz cible à détecter, comprend respectivement une partie de bande de fréquences dans laquelle le gaz cible (Zg) atténue au moins une partie du rayonnement [eW, s(t)],
- le détecteur de mesure (4) génère un signal de mesure [y(t)] résolu dans le temps qui est une mesure de l'intensité [s₂(t)] du rayonnement (eW) émis après que le rayonnement (eW) a traversé au moins une fois au moins une partie de l'échantillon de gaz (Gp) dans la chambre de mesure (2),
- le détecteur de référence (5) génère un signal de référence [x(t)] résolu dans le temps qui est une mesure de l'intensité [s₁(t)] du rayonnement (eW) émis après que le rayonnement (eW) a traversé au moins une fois au moins une partie du gaz de référence (Rg) dans la chambre de référence (3),
- une mesure [G_{f}(s)] du comportement de système [G(s)] d'un système est calculée dans le domaine fréquentiel,
dans lequel ledit système est excité par le signal de référence [x(t)] en tant que signal d'entrée et ledit système génère le signal de mesure [y(t)] en tant que signal de sortie en réponse à ladite excitation,
dans lequel, en particulier, la mesure [G_{f}(s)] du comportement de système est calculée en tant que fonction de transfert [G(s)] dans le domaine fréquentiel, et
- des informations de gaz cible (Erg) sont déterminées par l'évaluation de la mesure [G_{f}(s)] calculée du comportement de système [G(s)],
dans lequel les informations de gaz cible (Erg) comprennent au moins l'une des informations suivantes :
- quelle est la somme des concentrations de gaz cibles à détecter dans l'échantillon de gaz (Gp),
- quels gaz cibles (Zg1, Zg2) sont présents dans l'échantillon de gaz (Gp),
- pour au moins un gaz cible, de préférence pour chaque gaz cible, une mesure de la quantité ou de la concentration respective (con1, con2) dudit gaz cible dans l'échantillon de gaz (Gp).

8. Procédé de détection de gaz selon la revendication 7,
**caractérisé en ce que**
l'étape consistant à calculer la mesure [G_{f}(s)] du comportement de système [G(s)] comprend les étapes selon lesquelles
- la corrélation croisée [ρ_{xy}(τ)] dans le domaine temporel entre le signal de référence [x(t)] et le signal de mesure [y(t)] est calculée,
- une transformation de la corrélation croisée [ρ_{xy}(τ)] dans le domaine fréquentiel est effectuée et
- la mesure [G_{f}(s)] du comportement de système [G(s)] est calculée à l'aide du résultat [G(s)] de la transformation de la corrélation croisée [ρ_{xy}(τ)] dans le domaine fréquentiel.

9. Procédé de détection de gaz selon la revendication 8,
**caractérisé en ce que**
l'étape consistant à calculer la mesure [G_{f}(s)] du comportement de système [G(s)] comprend l'étape selon laquelle
la transformation de la corrélation croisée [ρ_{xy}(τ)] dans le domaine fréquentiel est effectuée par une transformée de Laplace ou une transformée de Fourier.

10. Procédé de détection de gaz selon l'une des revendications 8 ou 9,
**caractérisé en ce que**
la source de rayonnement (1) émet le rayonnement [eW, s(t)] avec un bruit blanc,
à l'aide du résultat [G(s)] de la transformation de la mesure de la corrélation croisée [ρ_{xy}(τ)] dans le domaine fréquentiel,
la fonction de transfert [G(s)] du système est calculée lors d'une excitation par le signal d'entrée [x(t)] et
la mesure [G_{f}(s)] du comportement de système est calculée à l'aide de la fonction de transfert [G(s)].

11. Procédé de détection de gaz selon l'une des revendications 7 à 10,
**caractérisé en ce que**
au préalable, les étapes sont effectuées, selon lesquelles
- la chambre de mesure (2) est remplie d'un échantillon de gaz de référence provenant de la zone (B) spatiale, dans lequel l'échantillon de gaz de référence est exempt de chaque gaz cible,
- la mesure de comportement de système est calculée en tant que mesure du comportement de système au point zéro à l'aide de l'échantillon de gaz de référence et
- lors de l'utilisation de l'appareil de détection de gaz (100), la mesure de comportement de système au point zéro est soustraite de la mesure de comportement de système [G_{f}(s)].

12. Procédé de détection de gaz selon l'une des revendications 7 à 11,
**caractérisé en ce que**
une quantité est prédéfinie avec au moins un gaz cible à détecter, de préférence avec plusieurs gaz cibles à détecter, et
pour le ou chaque gaz cible de la quantité et pour au moins une concentration prédéfinie dudit gaz cible, les étapes sont effectuées, selon lesquelles
- la chambre de mesure (2) est remplie d'un échantillon de gaz contenant ledit gaz cible à la concentration prédéfinie, de préférence d'un échantillon de gaz provenant de la zone (B) spatiale, et est exempte du gaz cible ou de chaque autre gaz cible,
- la mesure du comportement de système est déterminée à l'aide dudit échantillon de gaz, de sorte qu'une mesure de comportement de système de référence est déterminée pour ledit gaz cible, et
- la mesure de comportement de système de référence pour ledit gaz cible est utilisée lors de la détermination des concentrations de gaz cible.

13. Procédé de détection de gaz selon l'une des revendications 7 à 12,
**caractérisé en ce que**
un échantillon de gaz provenant de la zone (B) spatiale qui est exempt du gaz cible ou de chaque gaz cible à détecter est utilisé comme gaz de référence (Rg).
